(19) Europäisches Patentamt
European Patent Office
Office européen des brevets

(11) EP 1 193 976 A2

(12) EUROPEAN PATENT APPLICATION

(43) Date of publication:
03.04.2002 Bulletin 2002/14

(51) Int Cl.⁷: H04N 7/173, H04N 5/445

(21) Application number: 01122667.7

(22) Date of filing: 28.09.2001

(84) Designated Contracting States:
AT BE CH CY DE DK ES FI FR GB GR IE IT LI LU
MC NL PT SE TR
Designated Extension States:
AL LT LV MK RO SI

(30) Priority: 29.09.2000 US 670599

(71) Applicant: Gist Communications, Inc.
New York, NY 10012 (US)

(72) Inventors:
• Finster, Paul
New York, New York 10011 (US)

• Roth, Cliff
New York, New York 10038 (US)
• Ruderman, David B.
Brooklyn, New York 11217 (US)
• Greenburg, Jonathan
New York, New York 10014 (US)

(74) Representative: VOSSIUS & PARTNER
Siebertstrasse 4
81675 München (DE)

(54) **Method and system for creating and presenting a recommendation-based guide to television viewing choices**

(57) A customized and personalized recommendation-based guide is provided. A subset of all available choices are displayed based on what a user is most likely to be interested in, with rankings that put the most highly recommended choices at the top of the displayed recommendation guide. Programming provider information may be received from a user device. Based on the received provider information, available program information for available programs may be retrieved. The available program information may be processed based on user criteria resulting in a customized personal program listing. The customized personal program listing may be transmitted to the user device for presentation, the processed program information being a personalized subset of the available program information.

FIG. 1

**Description**

The field of the present invention is the dissemination of entertainment program information. More particularly, the present invention relates to presenting customized program information based on preferences expressed by viewers.

During the past few years, entertainment program viewers have been provided with increasing numbers of viewing choices. For example, several cable television ("CATV") providers now offer more than 100 hundred channels of programming to their subscribers. Digital cable television providers offer more than 200 channels, and satellite television providers offer over 500 channels to their subscribers. The Internet and the increasing availability of broadband communications have introduced the availability of a practically unlimited number of sources of streaming-video, representing an almost limitless diversity of content, from drama to sporting events and documentaries. This burgeoning number of choices exacerbates the viewer's problem of finding the programs of interest, as well as schedule information indicating when and on what channel (or from what source) the desired program is available.

Known electronic program guides do not solve this problem adequately. For example, a known electronic program guide displays the programming for about two hours showing about five channels at a time. These channel listings scroll up the television screen at a slow rate. Eventually, all of the programming for the limited amount of time can be seen by a viewer, who must disadvantageously wait until the channel in which she is interested scrolls onto the screen, and the programming for that channel is displayed. The more programming choices available to the viewer, the longer it takes to scroll through the complete list of channels. This time can become impractically long when the number of channels is large, or when the viewer is interested in seeing more than two or so hours of programming on a channel, or when non-scheduled "on demand" programming is included.

One known attempt to address the problem of showing program information for a large number of available channels permits the viewer to pick through a list of all of the channels available to her, and to select channels preferred by the viewer. The viewer is then shown programming only for the selected channels, and may miss information about programs of interest that are shown on channels that were not selected. This approach also may not work effectively for "on demand" programming that creates a separate video stream for each viewer. .

An embodiment of the present invention advantageously provides program information (e.g., program title, program description information, program source information (e.g., channel, URL, etc.) that has been customized for the viewer (also referred to as the "user") based upon a methodology or system of methodologies that can advantageously be selected by the user, as well as data about the user and/or data about the programs. The user can also advantageously manipulate the display of the selected information as she wishes.

In accordance with an embodiment of the present invention, the user can advantageously select from a plurality of methods for selecting a subset of program information for presentation to the user from the universe of available program information. For example, the user can specify the criteria (the methodologies or combination of methodologies along with data (e.g., information provided by the user, information about particular program content) on which program information is selected for display, and also specify how the information is played (e.g., on which device the information is to be displayed, format (columns, list, grid, other arrangement, etc.), colors, size, etc.) The information provided can be provided by the user explicitly, e.g., purposefully and directly by the user, or implicitly, e.g., online behavior of the user that is automatically tracked by the system with the user's consent. The methodologies are typically preset, but the user can advantageously alter parameters and combinations of the methodologies.

The present invention advantageously provides program information to a viewer that more correctly reflects the viewer's preferences for such information, including the way in which such information is selected from the universe of available program information, as well as the way in which such information is displayed to the viewer.

Embodiments of the present invention are illustrated by way of example, and not limitation, in the figures of the accompanying drawings in which like references denote similar elements, and in which:

Figure 1 is a network diagram according to an embodiment of the present invention.
Figure 2 is a block diagram showing a customized programming information server according to an embodiment of the present invention.
Figure 3 is a flow chart illustrating a method according to an embodiment of the present invention.
Figure 4 is a user criteria table listing user defined criteria according to an embodiment of the present invention.
Figure 5 is a first part of a web page in accordance with an embodiment of the present invention.
Figure 6 is a second part of a web page in accordance with an embodiment of the present invention.
Figure 7 is an exemplary embodiment of a web page in accordance with the present invention.
Figure 8 is an exemplary embodiment of a web page in accordance with the present invention.
Figure 9 is an exemplary embodiment of a web page in accordance with the present invention.
Figure 10 is an exemplary embodiment of a web page in accordance with the present invention.

Figure 11 is an exemplary embodiment of a web page in accordance with the present invention.
Figure 12 is an exemplary embodiment of a web page in accordance with the present invention.
Figure 13 is an exemplary embodiment of a web page in accordance with the present invention.
Figure 14 is an exemplary embodiment of a web page in accordance with the present invention.
Figure 15 is an exemplary embodiment of a web page in accordance with the present invention.
Figure 16 is an exemplary embodiment of a web page in accordance with the present invention.
Figure 17 is an exemplary embodiment of a web page in accordance with the present invention.
Figure 18 is an exemplary embodiment of a web page in accordance with the present invention.
Figure 19 is an exemplary embodiment of a web page in accordance with the present invention.
Figure 20 is an exemplary embodiment of a web page in accordance with the present invention.
Figure 21 is an exemplary embodiment of a web page in accordance with the present invention.
Figure 22 shows a program information selection process in accordance with an embodiment of the present invention.
Figure 23 is an exemplary embodiment of a recommendation guide in accordance with an embodiment of the present invention.

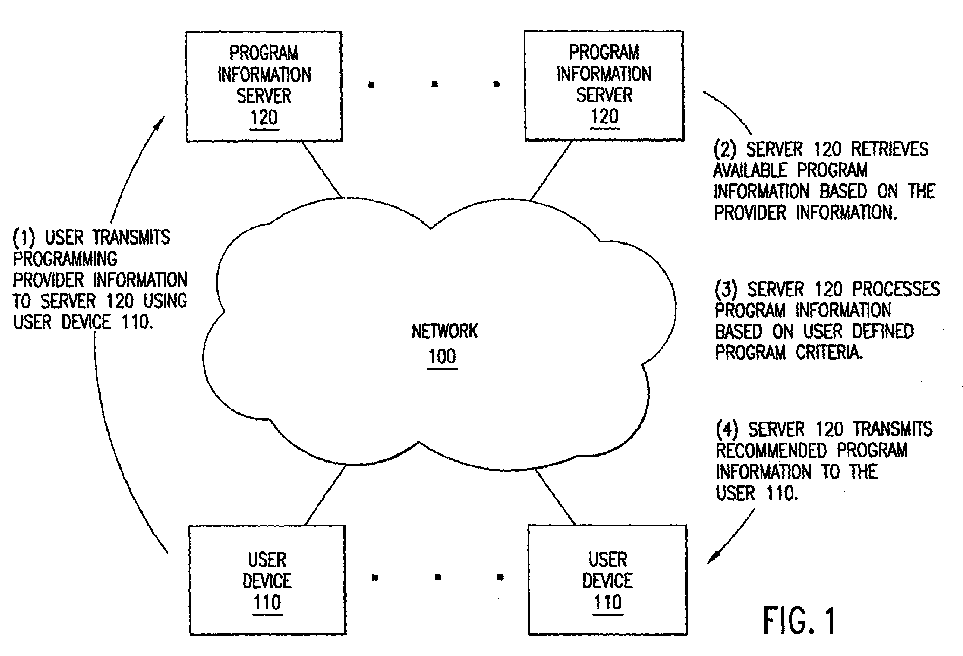

Referring to Figure 1, a system for presenting customized personal program information in accordance with an embodiment of the present invention is shown. A plurality of user devices 110 are connected to network 100. User devices 110 may be, for example, a personal computer connected to the network via a hard wired or wireless connection, a mobile telephone, a hand held device (e.g., a Palm Pilot or PALM PC) having a wireless interface to connect to network 100, a TV set, a set top box connected to a TV set, or any other suitable communication device. Network 100 can include, for example, the public switched telephone network (PSTN), a cellular network, the Internet, an intranet, a satellite network and/or any other suitable national and/or international communications network, a local area network (LAN), or any suitable combination thereof.
Customized program listing servers 120 may be coupled to network 100 via a highspeed connection, for example, a T-1, or T-3 connection. As used herein, "program information" is synonymous with "program information." In embodiments of the present invention, customized programming listing servers 120 can be high capacity computers having sufficient resources (hardware and software) to handle requests from a plurality of users at a time.
Embodiments of the present invention provide a recommendation guide providing recommended program information to one or more viewers. A viewer can be unaffiliated with a service provider, e.g., in the United States, a viewer can see programs on the publicly available broadcast channels. A viewer can also be a subscriber, i.e., have a billing relationship with a program provider, such as a CATV provider, a satellite television provider, etc. Program information server 120 includes software called a recommendation engine that provides a program recommendation guide to a viewer. The program recommendation guide can advantageously be based upon preferences expressed by the viewer, preferences of the viewer deduced indirectly about the viewer (e.g., demographic information known about the viewer based, for example, upon the viewer's billing relationship with a program service provider; online behavior of the viewer that is reported to the recommendation guide service that operates server 120; etc.) The recommendation guide can be a list of programs of interest to the viewer; the sources of such programs; the times at which such programs can be viewed; fee information about such programs; etc. As used herein, the term "user criteria" means any information provided by or about the viewer that is used directly or indirectly to select program information for display to the viewer. Examples of user criteria include demographic information about the viewer, preferences expressed by the viewer for a genre of program, a particular actor, a director, etc. For example, in one embodiment, the viewer sends a message from user device 110 to program information server 120 that indicates that the viewer prefers comedy entertainment programs. The recommendation engine at the program information server searches for all comedy entertainment programs from the universe of program information available to the recommendation engine, and sends the comedy program information to the requesting user device 110.
As another example, a viewer sends a message from user device 110 to program information server 120 indicating the identity of the viewer's television program provider. Such a message may include a zip code, an address, an explicit selection of the provider's name from a list of provider names, etc. The program information server can use the identity information received from the viewer to look up the identity of and/or program and schedule information pertaining to the viewer's provider, e.g., the particular cable company that serves the user's geographic area, the local broadcaster channels in the viewer's area, the satellite television company that services the user, etc. As used herein, the term "program information" means any information about an entertainment program that is used, directly or indirectly, to select program information for display to a viewer. For example, program information includes the genre (type) of a program, the actors in the program, its director, its length, its critical success, its commercial success (e.g., popularity ratings), its parental control rating, etc. The term "entertainment program" is meant to include all genres and types of programs, including audio-only programs, video programs, films, dramas, live events, sporting events, documentary pieces, educational shows, etc.

Thus, program information server 120 determines the programs available to a viewer and any user criteria about the viewer. Program information server then applies the user criteria to the program information available about the programs that are accessible to the viewer, and then filters program information of relevance to the viewer based upon the program information and user criteria. For example, if the user indicates that she receives TV programming from a satellite company "A," then program information server 120 retrieves TV program information for all channels provided by company A and/or subscribed to by the user. Program information servers 120 process the available program information using user criteria. By applying user criteria, servers 120 can eliminate all TV program information that does not meet user criteria. User criteria will be described below in more detail. After the available program listing has been processed, the remaining program listing information may be formatted in a manner as prescribed by the user and transmitted to the user device 110 for display. The program listing information that is transmitted to the user device 110 is preferably a customized personal programming listing that contains program information of programs that are of particular interest to the user and/or meet pre-defined user criteria.

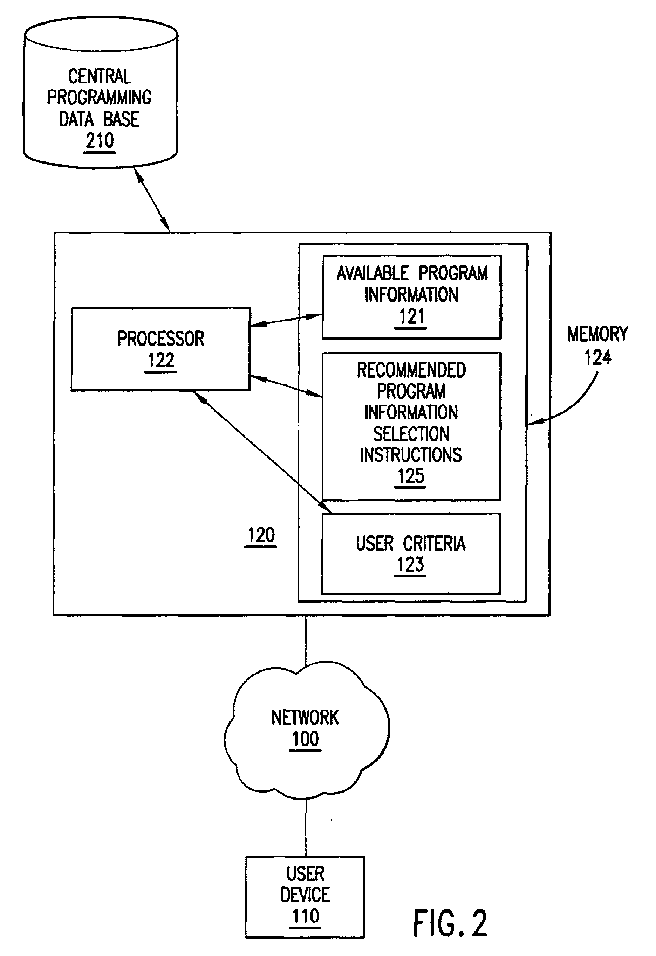

Figure 2 shows a block diagram of a program information server 120 in accordance with an embodiment of the present invention. Server 120 includes a processor 122 and memory 124. Processor 122 can be a general purpose microprocessor, such as the Pentium III manufactured by the Intel Corporation of Santa Clara, California. Processor 122 can also be an Application Specific Integrated Circuit ("ASIC") that embodies in its hardware and/or firmware at least part of the method in accordance with an embodiment of the present invention. An example of an ASIC is a digital signal processor. Processor 122 is coupled to memory 124. Memory 124 can be any device capable of storing digital information, such as Read Only Memory ("ROM"), Random Access Memory ("RAM"), a hard disk, flash memory, optical digital storage media, etc., or a combination thereof. At least part of memory 124 should be writeable as well as readable. Memory 124 stores program information instructions 125 (software) that are adapted to be executed by processor 122 to perform the method in accordance with the present invention, as well as data. For example, program information instructions 125 are adapted to be executed by processor 122 to filter program information based upon user criteria, and to send the resulting filtered information to a viewer. The data stored in memory 124 can include, for example, local program information server 121 and user criteria 123. Local program information 121 can include program information particular to a given country, region, state, city, town, television service provider, etc. Examples of such program information includes titles, schedules, descriptions, etc. of programs that are available from cable TV providers, satellite TV providers, local channels, streaming video providers and/or any other providers of entertainment programs. Figure 2 also shows server 120 coupled to a central TV programming database 210. Central TV programming database 210 may be a single database or a plurality of databases that contain program listing information, for example, available from a given program service provider or set of service providers, or for an entire country, region, state, city and/or town. In embodiments of the invention, database 210 may be located external to the server 120 (e.g., and connected to server 120 through a network), or in alternative embodiments, database 210 may be stored within server 120. Database 210 may be populated with program listing information by a third party program information service that compiles program listing information and provides this information to the database 210.

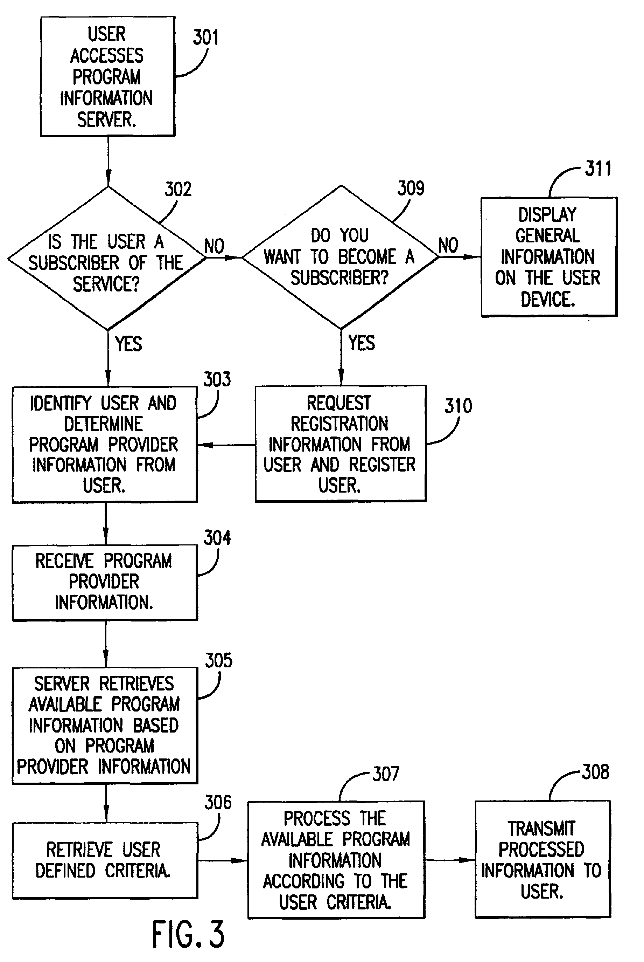

Figure 3 is a flow chart illustrating a method in accordance with an embodiment of the present invention. In step 301, a user may access customized program information server 120 using any one of a plurality of user devices 110. The user device may communicate with server 120 using, for example, Transport Control Protocol/Internet Protocol (TCP/IP), Wireless Application Protocol (WAP), or any other suitable communications protocols. In one embodiment, user device 110 can communicate with server 120 using a direct wireless connection, or through a wireless connection to the Internet. Alternatively, a wired connection using a modem or other interface device may be used. The user's device 110 has software needed to interfacing with a network and display information to the viewer, e.g., a browser.

A connection with server 120 may be established by the user and appropriate website information may be displayed on the user device 110. In step 302, it is determined whether the user is a subscriber of the recommendation guide service. If the user is not a subscriber, the user may be asked to become a subscriber, as shown in step 309. If the user desires membership, a registration process may be implemented to register the user and the necessary information may be solicited from the user, as shown in step 310. If the user does not desire membership, general information maybe presented to the user, for example, a general on-line or on-screen TV programming guide, as shown in step 311.

If the user is a subscriber, the user enters her user identification (user ID) and/or password using user device 110 or the user's ID and/or password may be automatically stored in the computer, set top box, TV set, etc. Once the user ID and password are confirmed, the user is identified and program provider information is determined, as shown in step 303. In embodiments of the present invention, the program provider information may be determined based on the user's residential zip code (i.e., home or primary zip code), a visiting zip code (e.g., temporary zip code), or other identifier (e.g., area code and first three digits of a local telephone number, or country code, etc.) that specifies the user's current geographic location, etc. A cable modem, set-top box, cell phone or other device may be enabled to automatically identify the subscriber's service provider, subscriber's location, and/or subscriber's zip code. The provider information as provided by the user may be used to determine a possible list of TV programming service providers that service the user's specified area. These service providers may include, for example, cable-TV providers, satellite-TV providers, local over-the-air providers, streaming video providers, and/or any combination thereof. A web page listing possible service providers may be displayed on the user device 110 and the user may be requested to enter the services available and/or to which the user is a subscriber. For example, if the user subscribes to a TV-satellite service and has a roof-top antenna, she may so indicate. In alternative embodiments, the user may simply identify the service providers by name.

If the user's service provider is not shown, the user may enter the name of her service provider(s), and the system of the present invention determines whether programming information for the user's service provider is available from the central programming database 210. If such TV programming information is available, the system retrieves this information.

Once program provider information is received from the user, server 120 may retrieve the available program listing information based on the program provider information, as shown in step 305. The server may have such information previously stored in local memory listing 121 of memory 123. Alternatively, server 120 may, based on the program provider information received from the user, retrieve available program information from the central programming database 210. Program information may include, for example, program title, episode name, channel and network on which it will air, start and end times, duration, actors, director, producer, writer, a summary description, genres, key words, TV ratings, indication of broadcast attributes like use of HDTV (high-definition TV) or closed captioning, and/or other suitable information.

In embodiments of the invention, the available program listing information may be analyzed, sorted and arranged in a variety of ways. For example, each program may be categorized by, for example, channel listing, title, genres (e.g., sports, news, documentary, drama, science fiction, comedy, etc.), subject matter, actors, ratings, rankings, TV "V-Chip" ratings, etc. Such information may be provided with each program and stored with each program listing.

As shown in step 306, user criteria are retrieved and applied, step 307, to filter the program information. This results in a set of program information that is of particular relevance to the viewer. The filtered program information is sent to the viewer for display and/or further processing, step 308.

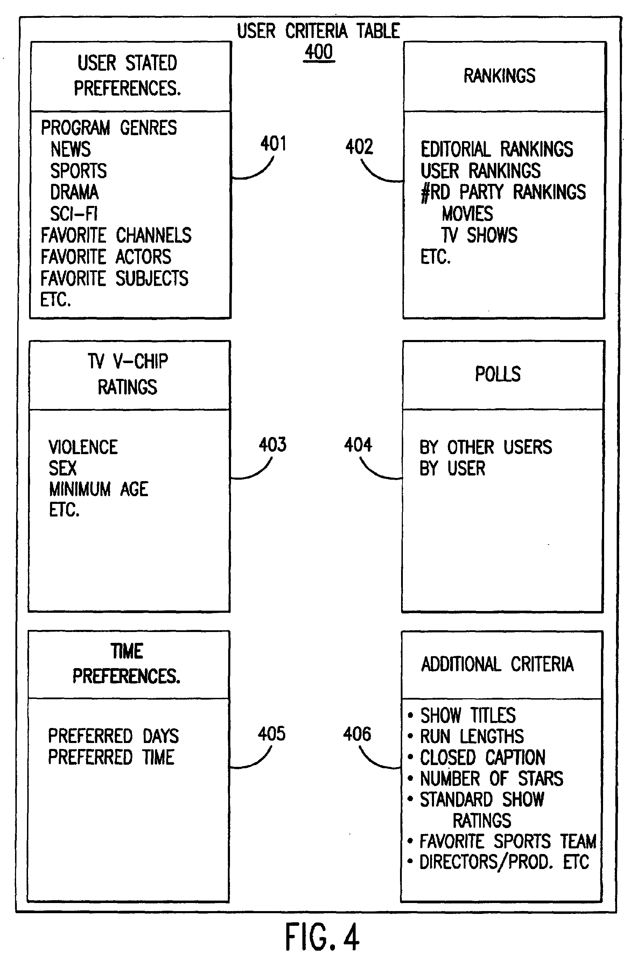

Figure 4 shows a table of user criteria in accordance with an embodiment of the present invention.

In embodiments of the invention, user criteria table 400 may include, for example, user stated preferences 401, rankings 402, TV chip ratings 403, polls 404, and timing preferences 405. User stated preferences 401 may include, for example, program genres (e.g., news, sports, drama, science-fiction, comedy, etc.), favorite actors, favorite subject matter, etc. Rankings 402 may include, for example, editorial reviews/rankings from recognized critics or staff of the recommendation guide service provider, third-party movie or TV ratings, etc. TV V-chip ratings 403 may include, for example, ratings based on the level of violence, sex, language content, suggested minimum ages, etc. Users, may be able to select programs based on user polls 404. These may include polls by other users of the recommendation guide service that rank the programs from one to ten, where ten is the highest rating. Time preferences may indicate, for example, specific time periods during the day for which the user would like customized TV program listing information. It is recognized that the Table 400 is not meant to be exclusive and that additional user criteria can be added and certain user criteria can be ignored. There may be several users whose IDs are separate but who all use a single device. For example, members of a household who share the use of the same set top box for the living room TV. In such cases, the recommendation guide for each user may be viewed individually, or they may be combined together. Additional criteria 406 may include, show titles, run lengths, programs with closed captioning, standard show ratings (or other show ratings), number of stars (for movies), favorite sports teams, and/or a particular director, writer, producer, etc. As used herein, the term "favorite" may refer to programs, shows, actors, etc. the user prefers based on, for example, specific selections made by the user, defined user criteria, users viewing habits, etc.

Other user criteria may include collaborative filtering/neural networking 405. Collaborative filtering systems may use, for example, a database about user preferences to predict additional topics or products a new user might like, and can "learn" from user behavior, i.e., change in accordance with additional express or implicit information about user preferences to reflect the new information in program information selections. In embodiments of the invention, a mathematical algorithm may be applied to user preference data to predict, for example, TV programs, movies, books, products, etc., in which the user is likely to be interested.

Referring again to Figure 3, user criteria may be received from the user during a registration process or may be received from the user device 110 in real time. User criteria may be stored in memory 124 and associated with the user by the user ID. In alternative embodiments, the user criteria may be stored in the user device 110 and transmitted to server 120 over the network 100. As shown in steps 306 and 307, the user criteria is retrieved and the available TV program listing may be processed using the retrieved user criteria.

In embodiments of the invention, the user criteria as selected by the user are compared with each of the available programming information and programs that do not meet user criteria may be eliminated. The remaining program listing information may be formatted in a grid, a list or any other suitable format and presented to the user as a customized personal program listing. It is noted that the presentation format may be limited depending on the presentation device. The customized personal program listing contains programs that or interest to the user and/or meet the user criteria.

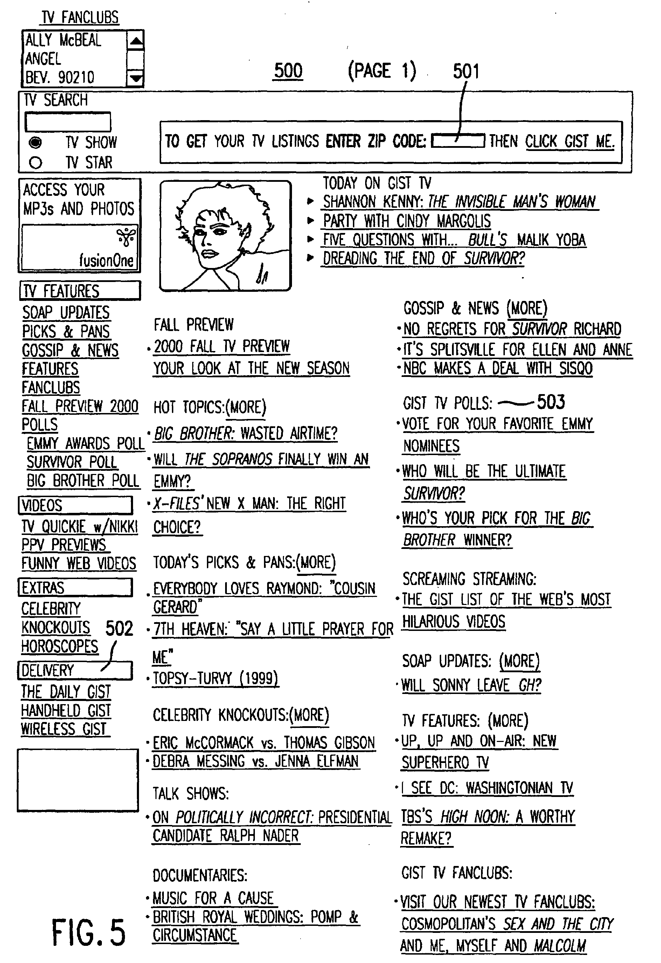

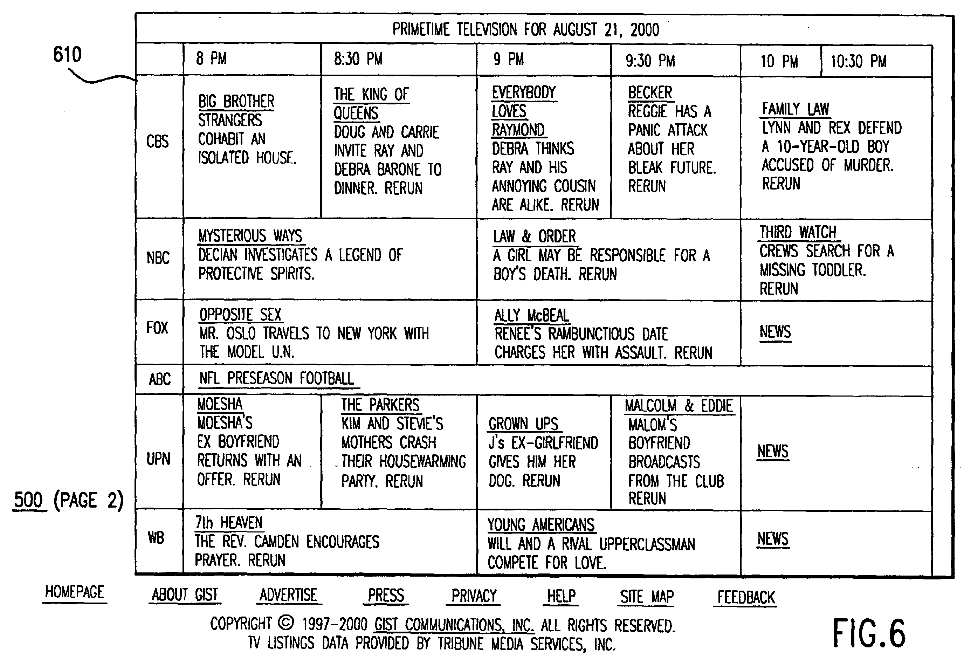

Figures 5 and 6 respectively show a first page and a second page of an exemplary web page 500 in accordance with embodiments of the present invention. It should be recognized that web pages shown and described herein are given by way of example only and should not be construed as limiting. Web page 500 maybe delivered to the user device 110 using, for example, TCP/IP, WAP, or other suitable protocols. In some instances the presentation device may limit the display format and/or the amount of displayable data. For example, in the case of WAP it is possible to only display text on the user device 110. Web page 500 may include plurality of different links to programming information that the user may access to determine which programs may be of interest to the user. The user may use the information provided on the web page to create a custom personalized viewer grid or list (recommendation guide). In this example, the user may be asked to enter her zip code or other programming provider information in location 501 of the web page. As described above, the zip code may be, for example, a home zip code or a visiting zip code. The visiting zip code may correspond to a geographic location being visited by the user. The user may specify a delivery option 502. Delivery option 502 may include, for example, a handheld and/or wireless device such as a cell phone or PDA, a personal computer, set-top box or any other suitable device. The presentation of the web page may be customized for optimal viewing using the selected delivery option.

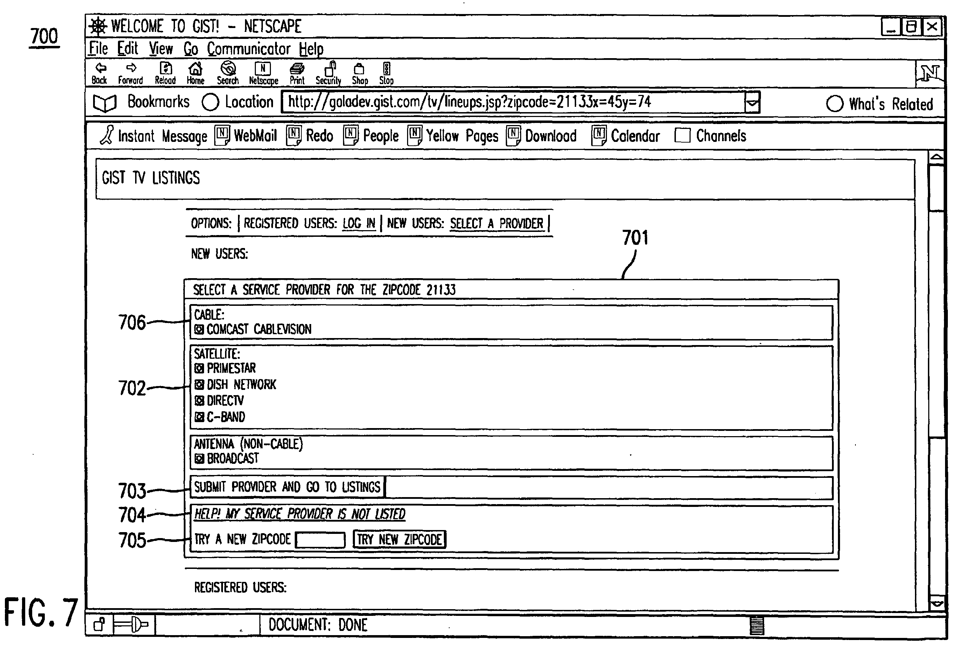

Figure 6 shows the second page of web page 500. Web page 500 may further include a section of a programming guide 610. If the user is a new user, guide 610 may specify prime time TV program listing for that particular date. In alternative embodiments of the present invention, guide 610 maybe a listing of the user's favorite channels or may be the user's personalized viewer grid. Figure 7 shows an exemplary web page 700 listing a plurality of service provider that may serve the area specified by the zip code 701. Although, in this exemplary embodiment, a zip code is used to specify the user's current location, it is recognized that other identifiers may be used. For example, the user may enter the area code and first three digits of the local telephone in the area. The program information server uses this information to select program service providers available to the viewer, and then lists them for the viewer. In the example shown in Figure 7, the list includes a satellite provider 702, public broadcasters 703 and a CATV provider 706. Other providers, such as sources of streaming-video content over the Internet, may also be shown. Each of the members of the list are provided with a checkbox by which the viewer can indicate if she is a subscriber, or otherwise desires to consider the set of program information for that provider. The viewer submits her selections and requests program information by choosing button 703.

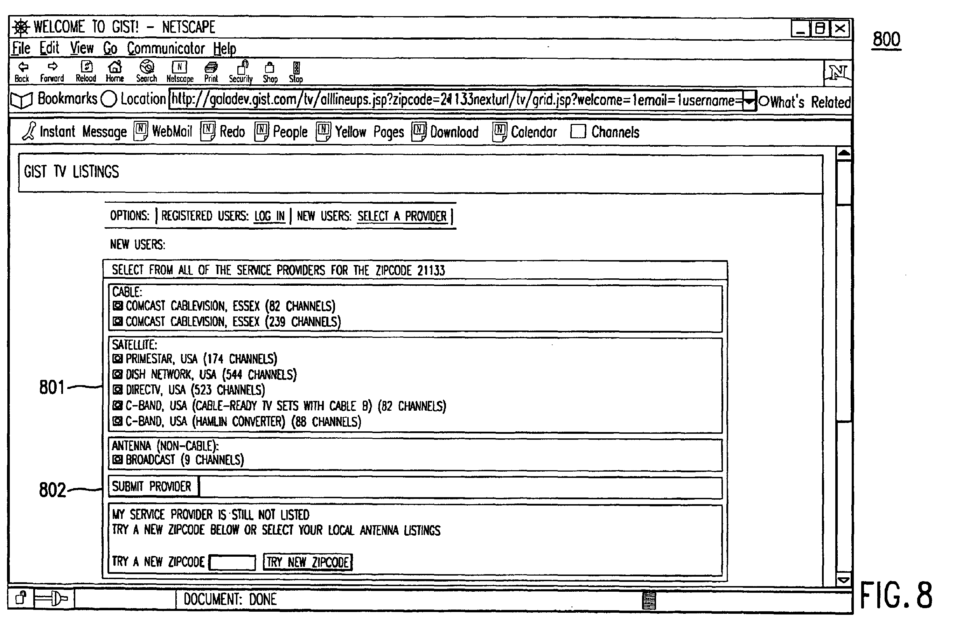

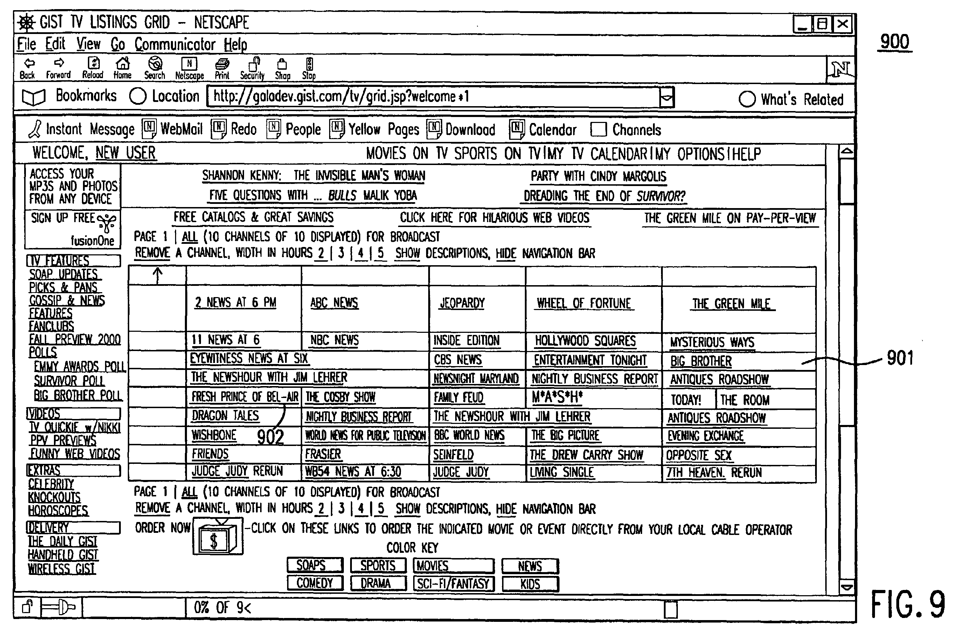

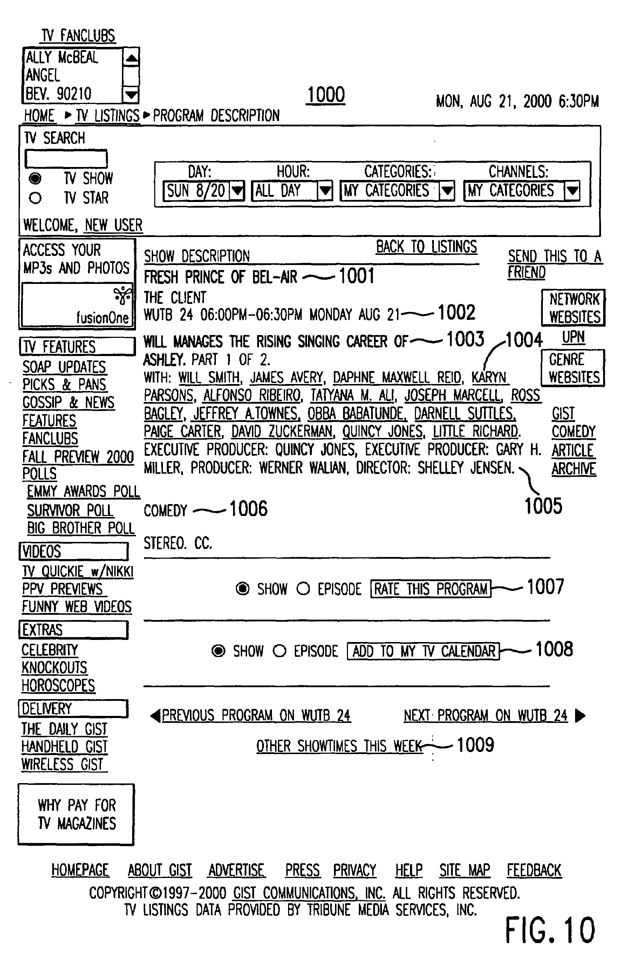

If the user's service provider is not listed, user may elect to seek "help" by selecting hyperlink 704 or by entering a new zip code in 705. If the user elects to seek help by selecting hyperlink 704, exemplary web page 800 may be presented on the user device 110, as shown in Figure 8. Web page 800 may list additional programming providers 801 for selection by the user. Once the user finds her service provider(s) on web page 700 or 800, the user may either select hyperlink 704 or 802, respectively. After provider information has been submitted, program information web page 900, as shown in Figure 9, may be displayed on user device 110. In this exemplary embodiment, program listing for the provider indicated by the user may be provided for a predetermined time period, for example, between 6:00 PM - 9:00 PM. In alternative embodiments of the invention, the user may specify other time periods for which programming information is desired. The user may view TV program information for the next day, or the next two or three days, or even for an entire week and/or month. This information may then be used to schedule automatic recording of the desired program(s). Guide 901 displays the TV programming information for the TV programming provider as indicated by the user. A user may scroll through program information and look for additional programs of interest. To get additional information on the programs listed, the user may simply select that program. For example, if the user likes to watch the show titled "Fresh Prince of Bel-Air," the user may select hyperlink 902. Selecting hyperlink 902 may cause web page 1000 as shown in Figure 10 to be displayed on the user device 110.

Figure 10 shows detailed description for the TV program selected by the user. Web page 1000 is given by way of example only. It is recognized that the user may select any TV program for which to view additional information. Web page 1000 may display the title 1001 of the TV program selected, timing and scheduling information 1002, a summary or description of the episode 1003, names of actors 1004 appearing in the episode, producers of the show 1005, and genres category 1006 of the TV program. In addition, web page 1000 may provide a opportunity to specify a personal rating the show as a whole or for the particular episode 1007. Of course, the show/episode option may not be available for all program types (e.g., movies). If the user desires, the TV program may be added to the user's customized personal viewing calendar by making selection 1008. By selecting link 1009, the user may be presented with additional show-times for the TV program.

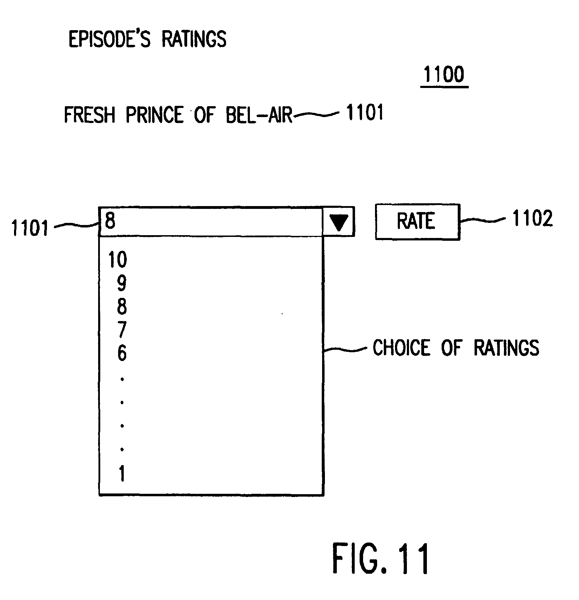

As shown in Figure 11, if the user desires to rate the TV program by selecting link 1008, the user may be presented with web page 1100. Web page 1100, may indicate the title of the TV program 1001 to be rated as well as the other information. Web page 1100 may also include the user's previous rating for this show or episode in box 1101 where applicable. The user may rank the TV program from 1 to 10 (or using some other rating scale) in the box 1101 and submit the selection by selecting link 1102. The user's rating may be combined with ratings from other users and may be presented to the users to indicate how other viewers of the programs ranked a particular show, episode, movie, etc.

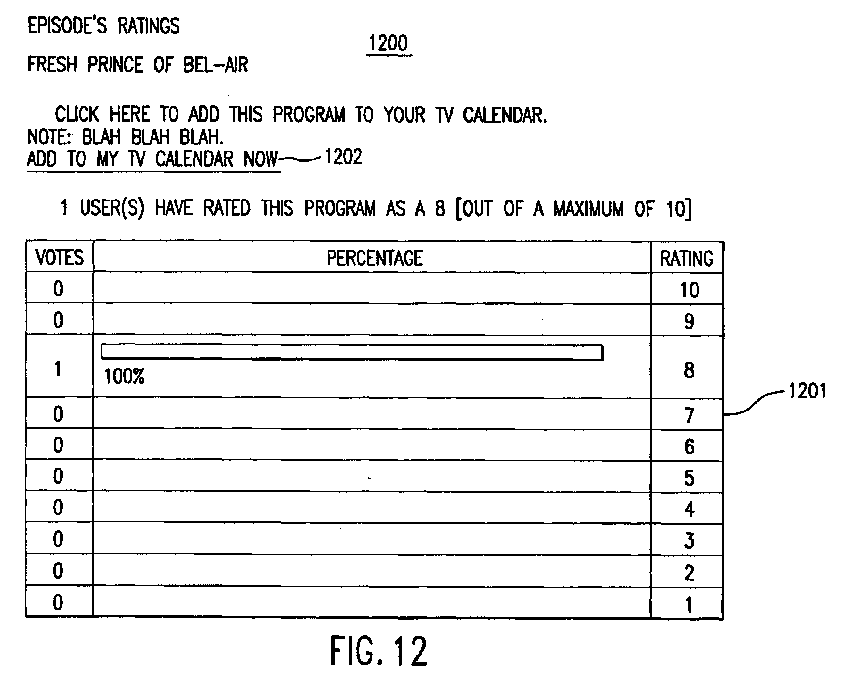

Once the user submits her rating, web page 1200 may be presented to the user on user device 110, as shown in Figure 12. Web page 1200 may include rating grid 1201 indicating how many votes that particular TV program has received as well as the rating for the TV program. Accordingly, the user can not only rate the TV program, but see how others have rated the TV program. Figure 12 shows a single vote cast for the show Fresh Prince of Belair with a rating value of "8". As more users cast votes, the percentage of votes cast for each rating is advantageously shown by a bar indicator and a text percentage representation in accordance with an embodiment of the present invention. Thus, the user can see a profile of the ratings by numerous users of a show across different numerical ratings at a glance.

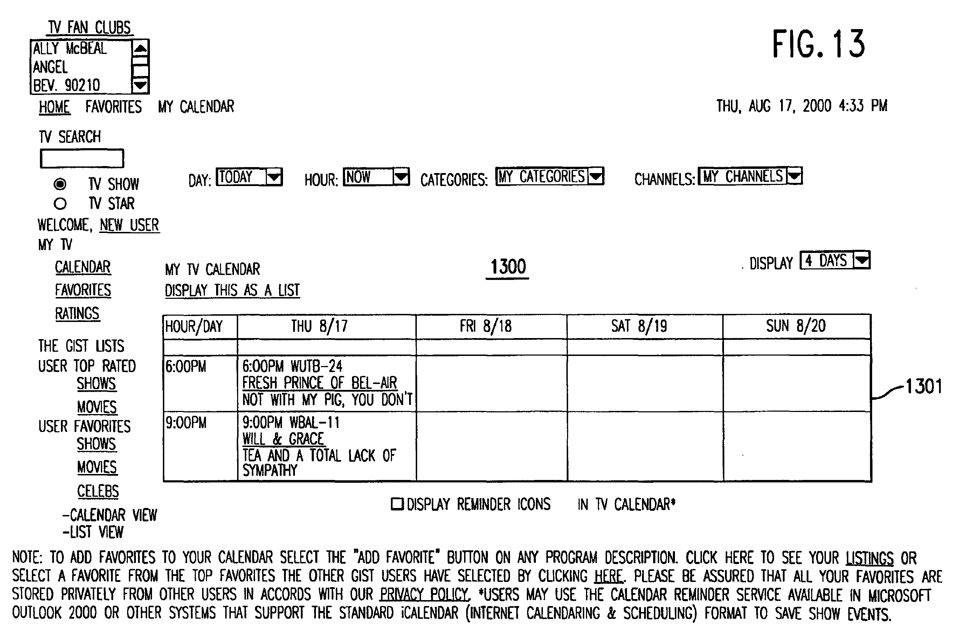

If the user desires to add the TV program to her customized personal calendar in accordance with an embodiment of the present invention, the user can, for example, make selection 1008 in web page 1000, or alternatively, select link 1202 in web page 1202 to add the TV program listing. The personal calendar advantageously reminds the user of favorite shows, and provides a longer-term view of shows that the recommendation engine can select on the user's behalf, based upon user criteria and program information. The personal calendar can be used to enable automatic recording of specified shows. If the user elects to add the TV program to her customized personal calendar, web page 1300 may be presented to the user, as shown in Figure 13. Web page 1300 shows an exemplary customized personal calendar 1301 (i.e., recommendation guide) listing the programs that are of particular interest to the user. In this example, only four days are shown, however, the user can customize a personal grid for an entire week, month, or for even longer period of time. The user can also select their preferred viewing hours, for example, 6:00 PM to 11:00 PM.

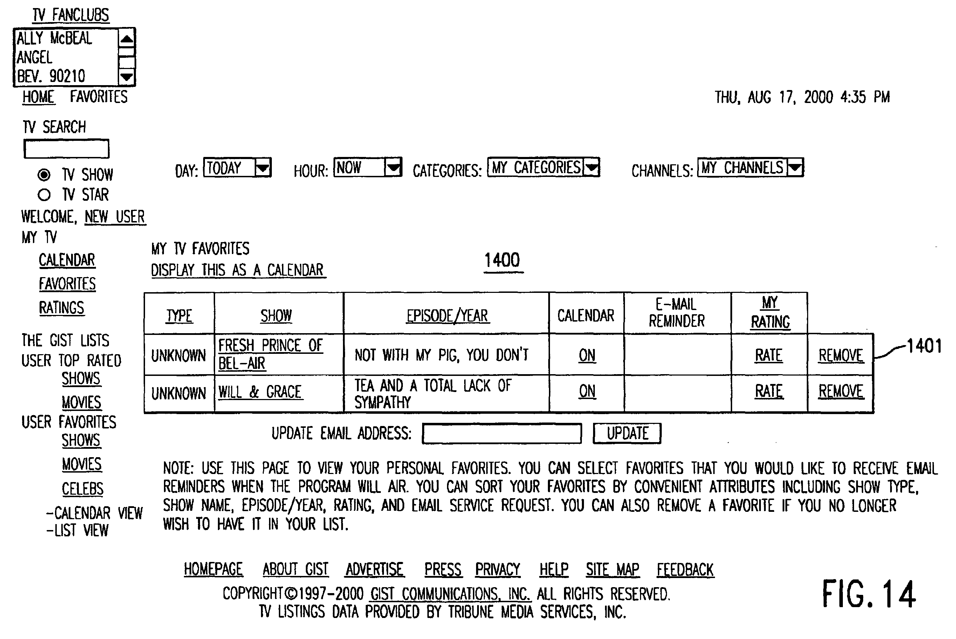

The customized personal calendar may be provided as a grid 1301 or, in any other suitable format, as shown in Figure 14. The user's preferences and other similar looking lists of data (e.g., top ratings) are displayed in a particular sort order. For example, the user's preferences may be sorted by title. The user may also elect to perform a secondary sort on the supplied data by clicking on the appropriate column heading, for example, sort by "My Rating."

In one embodiment of the present invention, web pages 1300 and/or 1400 may include a link specifying "my categories." For example, the user may have selected a set of genres that she is interested in viewing. Optionally, the user may have indicated a list of genres she does not wish to view. A user preference or an option button on the calendar page could be used to indicate that the list of programs be limited only to the set of genres in which the user is interested.

In alternative embodiments of the present invention, a user may create other preloaded calendar profiles (e.g., created by editorial profiles). These profiles may be created, for example, based on editorial selections of the day/week in all genres orpicks based on genres such as sports, soaps, best movies, new fall shows, etc. Sport packages and/or movie packages may include a plurality of sporting events and/or movies available or desired by the user.

Although the above description is presented with reference to a single program listing, it is recognized that a user can select a plurality of programs that may be of interest to the user. The user may rate these programs as described above and, if desired, the user may add the plurality of programs to her customized personal calendar grid 1301 or list 1401.

In embodiments of the invention, the customized personal program information can be displayed as a grid or calendar format, as shown in Figure 13, or alternatively, personal program information can be displayed as a list, as shown in Figure 14. In embodiments of the invention, program channels may indicate the exact time when programs will start and end. The list 1401, for example, could be sorted by a particular day, week based on scheduling. Alternatively, a list may be presented for a particular channel or a set of channels of interest.

The personalized program information may be rendered using HyperText Markup Language ("HTML"), Extensible Markup Language ("XML") or any other suitable language. The program information can be viewed, printed, and/or used as a basis for sending viewing and/or recording instructions to a player (e.g., a television, a computer, a handheld wireless device, etc.) or a video recording device (such as a VCR, PVR, video disc recorder, etc.) The program information may also be generated, for example, a day or week in advance for different purposes. For example, a user may use the advanced program information to program their video recorder to record programs of interest. In alternative embodiments of the invention, the program information could be used to generate timed reminders to alert the user before a TV program will start, for example, the user could receive an e-mail or pager message 15 minutes before a recommended TV program begins. Alternatively, the user could receive just one e-mail daily containing a list of the day's recommended programs.

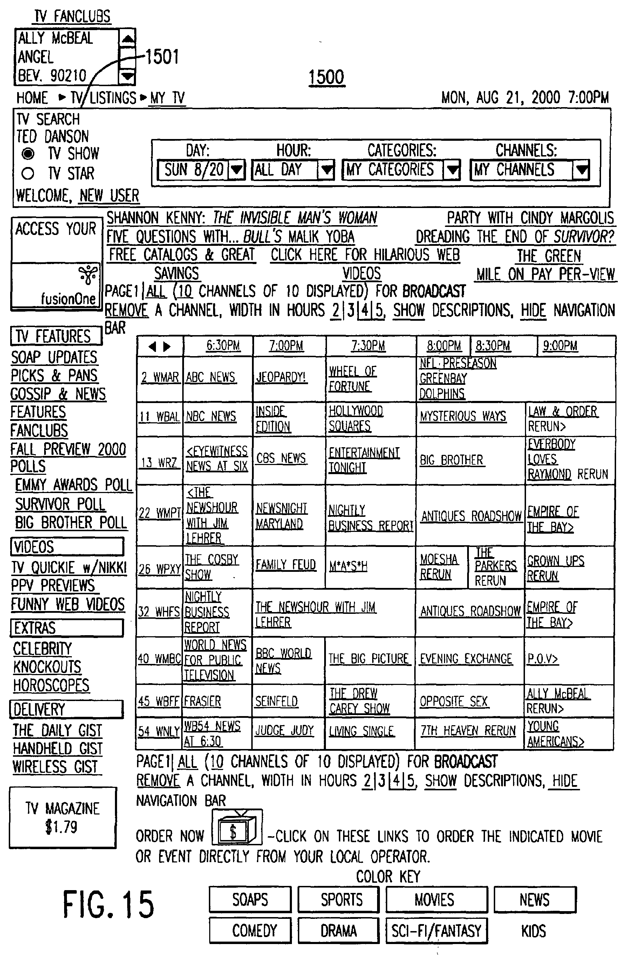

As shown in Figure 15, the user may perform a TV star search for a favorite TV star. For example, in box 1501 of web page 1500 the user may invoke a search for actor "Ted Danson." The search may be performed on all the programs that are available to the user. The search may uncover all shows in which "Ted Danson" appears. The user can combine these criteria with others such as to find only comedy programs where Ted Danson appears.

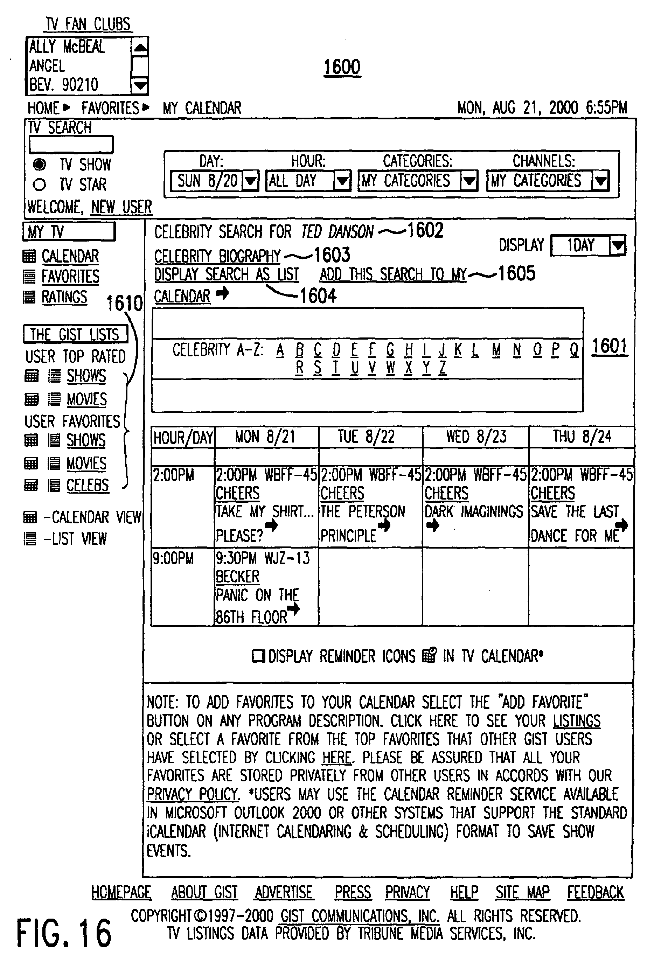

Figure 16 shows an exemplary search result 1601 indicating all the programs, for a given time period, in which "Ted Danson" appears. Web page 1600 may indicate the name of the star 1602, and well as a link 1603 to a celebrity biography. In addition, the user may elect to display this TV program grid 1601 as a list by selecting 1604 on the web page 1600. A program/celebrity search such as that shown for "Ted Danson" may be added to the user's criteria profile automatically by choosing selection 1605. The term "user criteria profile" refers to the set of information stored either locally by the user and/or at the program information server that describes user criteria for selecting relevant program information. In this way, an embodiment of the present invention advantageously permits the user to update her criteria as she performs searches and submits other information and requests to the program information server recommendation engine.

In embodiments of the present invention, the user may desire to see all the top rated programs, shows and/or movies, and/or favorite programs, shows and/or movies as rated and/or selected by users of the recommendation guide service. As shown in web page 1600, the user can view top rated programs by making the desired selections 1610.

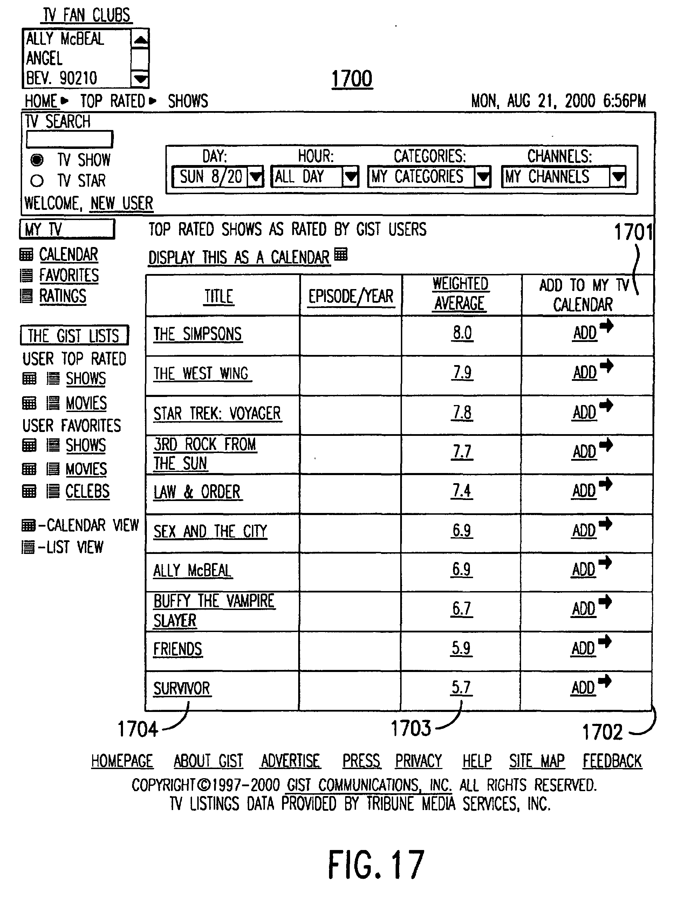

Figure 17 shows web page 1700 that provides a list or grid 1701 of top rated shows as may be rated by users of the recommendation guide service. The list 1701 may include, for example, titles 1704, and corresponding weighted averages 1703 for the top rated shows. The weighted average may be calculated by employing any one of many statistical methods (e.g., Bayesian algorithm known in the art). In addition, the user can add the selected top rated show(s) to her customized personal calendar 1301 by making the appropriate selection(s) 1702. In embodiments of the invention, grid 1701 may be overlaid over and /or added to the user's customized personal calendar grid 1301 or list 1401.

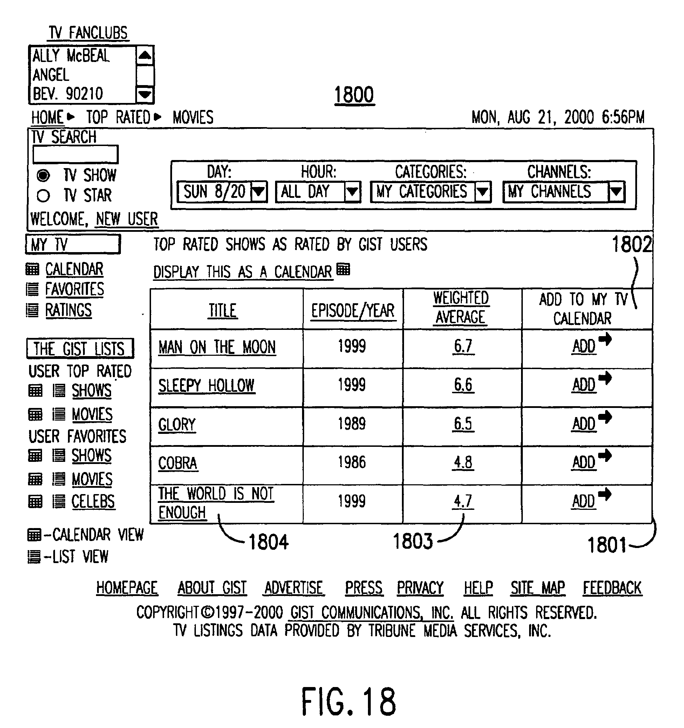

Figure 18 shows web page 1800 that provides a list or grid 1801 of top rated movie(s) as may be rated by users of the recommendation guide service. The list 1801 may include, for example, titles 1804, and corresponding weighted averages 1803 for the top rated movies. In addition, the user can add the selected top rated movie(s) to her customized personal calendar 1301 by making the appropriate selection(s) 1802. In embodiments of the invention, grid 1801 may be overlaid over and/or added to the user's customized personal calendar grid 1301 or list 1401. Although in the above description, the ratings are provided by users of the recommendation guide , in alternative embodiments of the present invention, ratings may be provided by a third party source, for example, Nielsen's rating service.

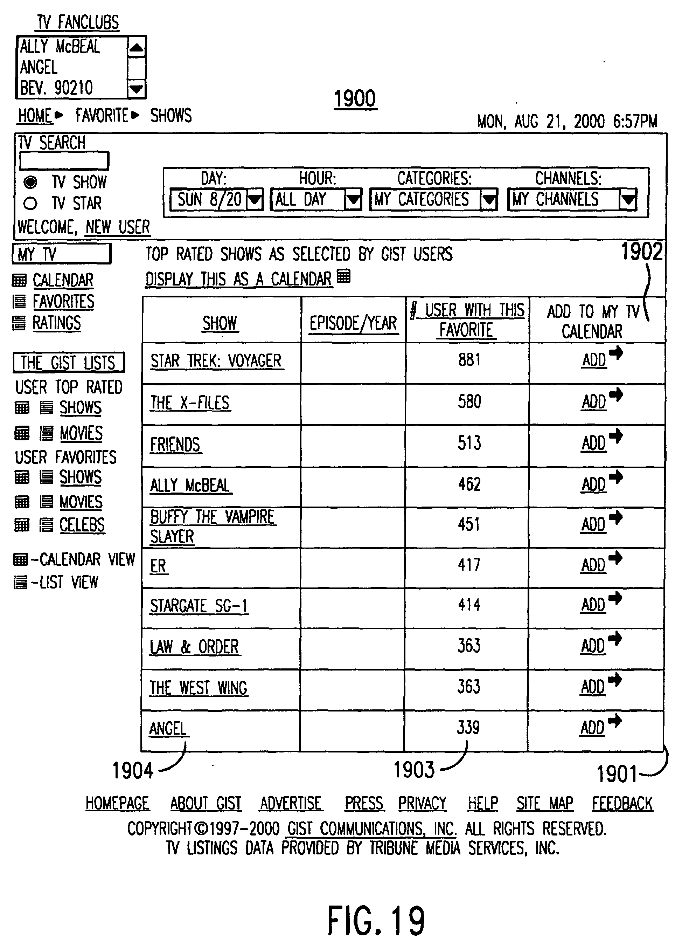

Figure 19 shows web page 1900 that provides a list or grid 1901 of favorite shows as may be selected by users of the recommendation guide service. The list 1901 may include, for example, show titles 1904, with corresponding number of users 1903 that have selected the show as a favorite. In addition, the user can add the selected favorite show(s) to her customized personal calendar 1301 by making the appropriate selection(s) 1902. In embodiments of the invention, grid 1901 maybe overlaid over and/or added to the user's customized personal calendar grid 1301 or list 1401.

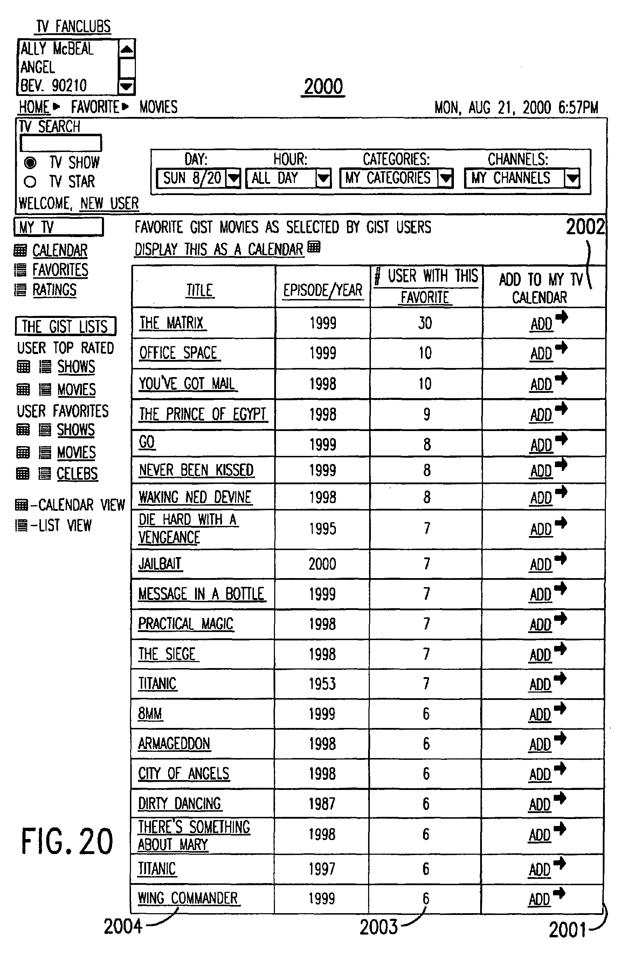

Figure 20 shows web page 2000 that provides a list or grid 2001 of favorite movie(s) as may be selected by users of the recommendation guide service. The list 2001 may include, for example, movie titles 2004, with the corresponding number of users 2003 that have listed the movie(s) as a favorite. In addition, the user can add the selected favorite movies(s) to her customized personal calendar 1301 by making the appropriate selection(s) 2002. Other columns in grid 2001 can include the genre of the show, the name of an actor starring the show, the name of the production company, the name of the director, etc. In embodiments of the invention, grid 2001 maybe overlaid over and/or added to the user's customized personal calendar grid 1301 or list 1401.

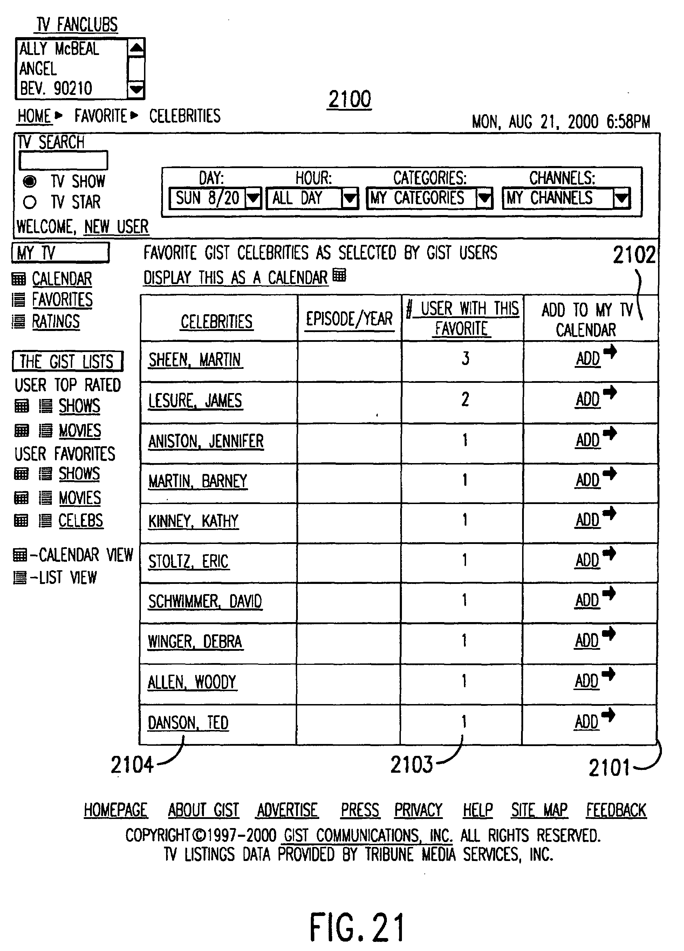

Figure 21 shows web page 2100 that provides a list of favorite celebrities as selected by users of the recommendation guide service. The list 2101 may include, for example, name of the celebrity 2104, with corresponding number of users 2103 that have listed the celebrity as a favorite. In addition, the user can add shows in which the selected favorite celebrity is starring to her customized personal calendar 1301 by making the appropriate selection(s) 2102. In embodiments of the invention, grid 2101 may be overlaid over and/or added to the user's customized personal calendar grid 1301 or list 1401.

It is recognized that in embodiments of the present invention, the user may perform additional searches to determine programs that may be of interest to the user. Since the programming listing information is stored in a database format, a user can perform a plurality of different types of searches to find programs of particular interest to the user. For example, the user may wish to search for top TV program descriptions pages viewed. The user may wish to limit the search for the current day, the current week, current month, or perform a search for the top TV program description pages viewed to date. The user may further analyze and/or view top searches performed today, this week or to date. In alternative embodiments of the present invention, the user may perform a search for the top recorded shows for the current day, current week or to date.

A user may perform key word search on the available program information. For example, if the user is looking for a particular subject matter of interest, the user may perform a search using keywords related to the subject matter desired. The search may be limited to the title of the show, the TV program description or other program specific criteria.

The user can further perform searches on top fan clubs by page views, by quiz results, or by other attributes. Additional searches may be performed based on top "e-mailed to a friend" shows. This search may be for based on a number of e-mails per day, per week or to date, etc. It is to be recognized that above indicated searches may be conducted using known boolean techniques and functions (e.g., AND, OR, XOR, AND NOT). The results of the searches may be overlaid over and/or added to the user's personal customized program information.

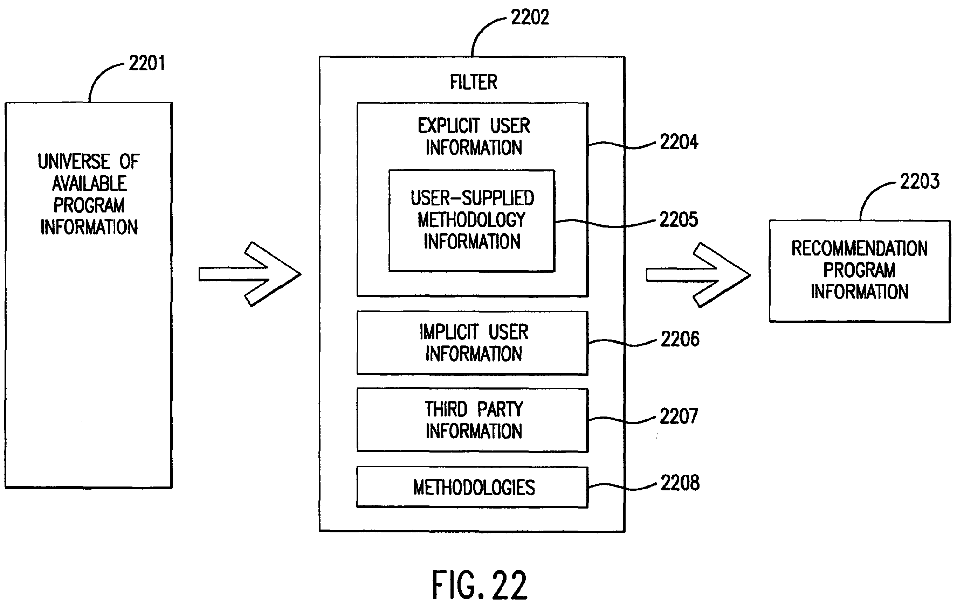

A more detailed overview of the selection process in accordance with an embodiment of the present invention is shown in Figure 22. The universe of available program information 2201 is processed through filter 2202 in accordance with user criteria and one or more methodologies to produce recommended program information 2203. Program information can include program title, channel, network, duration, description, list of cast members, director, producer, keywords, television ratings (e.g., parental control ratings, etc.), broadcast attributes (e.g., HDTV, closed captioned information, subtitle languages, etc.) genre information (e.g., sports, comedy, etc.), program type indicator (e.g., a television show, a movie, live, recorded, repeat), editorial information (e.g., critics ratings, etc.), Nielsen ratings, whether a show is syndicated or not, whether it local or network in origin, season premier indicator, secondary audio program indicator, price of view, 3-D, stereo indicator, letterbox indicator, color or b/w indicator, country of origin, licensing information (e.g., permission-to-view and/or permission-to-record indicators, including pricing information based upon viewing location, etc.), quality indicator (e.g., high resolution, low resolution, etc.), package indicator (channel and/or program package identifier to which program belongs), part indicator (e. g., which episode the program is in a serial), shown with or without commercials, etc.

User criteria can include explicit or implicit information, such as channel selections, genre selections, favorite stars, keywords, demographic information about the user and/or the user's household, premium packages (subscription plans), language requirements/preferences, subtitles preferences, closed caption preference, user program rating, and any other information corresponding to the user's preferences and/or behavior with respect to program information described above. An example of an explicit user criteria is a preference indicated by a user through a graphical user interface, such as apreference for comedy, a dislike of adventure programs, information about which program information selection methodologies to combine and how to combine them, etc. An example of an implicit user criterion is information about the viewing behavior of the user, such as the user consistently watches programs with close-captioning, the genre of the programs watched by the user, the actors starring in the programs watched by the user, etc.

The methodologies in accordance with embodiments of the present invention can include any selection method useful for discerning program information of particular relevance to a user from the universe of available program information. For example, one methodology is to simply filter all available program information based upon information about an individual user's preferences, showing only the program information that meets the requirements set forth in the user information. For example, a user indicates a keyword "Olympics", the genre "News", and an indication from the user that only programs that are close-captioned are of interest. In response, an embodiment of the present invention returns only program information pertaining to news programs about the Olympics sports festival that are closed captioned. Another methodology involves information from sources other than the user herself. For example, the user specifies that only programs in the sports genre that are recommended with at least three stars by a third party editorial staff are of interest. As a result, the user is shown program information for sports programs that meet these criteria.

The user can advantageously combine methodologies in accordance with an embodiment of the present invention. For example, a first methodology selects based upon editorial ratings. A second methodology selects based upon the Nielsen rating (popularity among the viewers) of a show. The user selects both methodologies, and assigns a weight of 25% to the first methodology and 75% to the second. For example, the user specifies a preference for shows with at least a four-star editorial rating and assigns 25% weight to this criterion, and shows that have been among the most popular 15 shows as rated by Nielsen and assigns a 75% weight to this criterion. The recommendation engine advantageously applies the methodologies selected by the user, providing recommended program information about shows that were both critically acclaimed and popular. Critical success plays a smaller role in determining if program information is selected to be recommended program information about a particular show as compared with viewer popularity, as specified by the user. The user can also specify the quantity of recommendations received based on these criteria, for example, showing the five or ten strongest recommendations for a given time period.

In more detail, one way to accomplish this is to assign a numerical value to a program based upon its critical success. A show rated between zero and 1.5 stars by one critic, or an average of such stars for the program as provided by a plurality of critics, is assigned a critics rating equal to the number of stars. Thus, a show with an average critical rating of 1.5 stars receives a numerical critic value of 1.5. Likewise, a show whose highest rating has been in the top ten most popular shows by Nielsen is given a popularity value of 4. A show that has been given a highest rating in the twentieth to eleventh most popular shows by Nielsen is given a popularity value of 3. A show whose highest popularity never reached above the twenty-first most popular show is given a popularity rating of 1.

Let the critical value of a show be "c" and the popularity value of a show be "p." Let the weight assigned by the user to the critical value of a show be $W_c$ and the weight assigned by the user to the popularity be $W_p$. Then, in accordance with an embodiment of the present invention, the recommendation engine calculates recommendation rating "R" as:

$$W_c\, c + W_p\, p = R$$

The recommendation engine then applies a suitable criteria to select recommended program information from the universe of available programs on which R is calculated. For example, in one embodiment, the recommendation engine selects recommended program information based upon a predetermined threshold, e.g., the shows with the top one-third highest values of R; the top five shows with the highest ratings of R; etc. Program information about the selected shows are then sent to the viewer to be displayed.

Another way for a user to combine methodologies is using boolean connectors, e.g., AND, OR, AND NOT, etc. For example, the user can specify:

> Shows Rated in the Top Five Most Popular by a Community of Users
> AND
> Shows That Are Close-Captioned
> AND
> Shows That Are in the Top 20% Rated Shows by Critics
> OR
> Shows Starring Elizabeth Hurley OR Heather Graham
> AND NOT
> Shows Starring "Ted Danson"

The recommendation engine advantageously applied these criteria to select shows that have received high ratings from a community of users (e.g., the users of the recommendation guide service); shows that are close-captioned (shows that are not close-captioned are excluded); critically popular shows; shows with Elizabeth Hurley or Heather Graham without regard to the previous criteria; and shows are excluded if they include an appearance by "Ted Danson". In this way, the user can advantageously express her preferences for program information in a more detailed, richer and more precise fashion than in known program guides.

Other methodologies include neural networks whose parameters change based upon explicit or implicit information provided by or about the user. Neural network methodologies can advantageously be combined with other methodologies in accordance with an embodiment of the present invention. For example, the output of a neural network methodology can be weighted and combined with the output of a rating methodology; be a part of a boolean combination of methodologies; etc.

The elements of the process in accordance with an embodiment of the present invention are shown in Figure 22. The universe of available program information 2201 is filtered to provide recommended program information by filter 2202. Filter 2202 includes explicit user information 2204, such as preferences provided by the user, as well as user information on the selection and/or combination of methodologies 2205 that the user wishes to use to filter the universe of available program information 2201. User criteria 2202 also includes implicit user information 2206, such as user demographic information collected from sources other than the user, user viewing histories and habits, user online behavior, etc. User criteria can also include third party information 2206, such as ratings information by critics, other users, etc. It should be noted that third party information that is particular to a specific program is typically stored as a part of the program information, associated with the specific program to which it applies. However, third party information pertinent to categories of programs, sources of programs, etc., i.e., not to a specific program, can be maintained independently of program information. For example, while the critical rating of a program can be stored in the program information database (e.g., 210 in Figure 2), general information such as the overall popularity of a source (e.g., a network, a source of streaming video on the Internet, etc.) can be stored and maintained (e.g., updated) elsewhere, such as at the user device 110 and/or the program information server 120 shown in Figure 1.

Filter 2202 also includes filtering methodologies, i.e., specifications for the methodologies used to discern recommended program information 2203 from the universe of available program information 2201. The methodologies are embodied in software instructions adapted to be executed on a processor at the program information server 120, the user device 110, or a combination thereof.

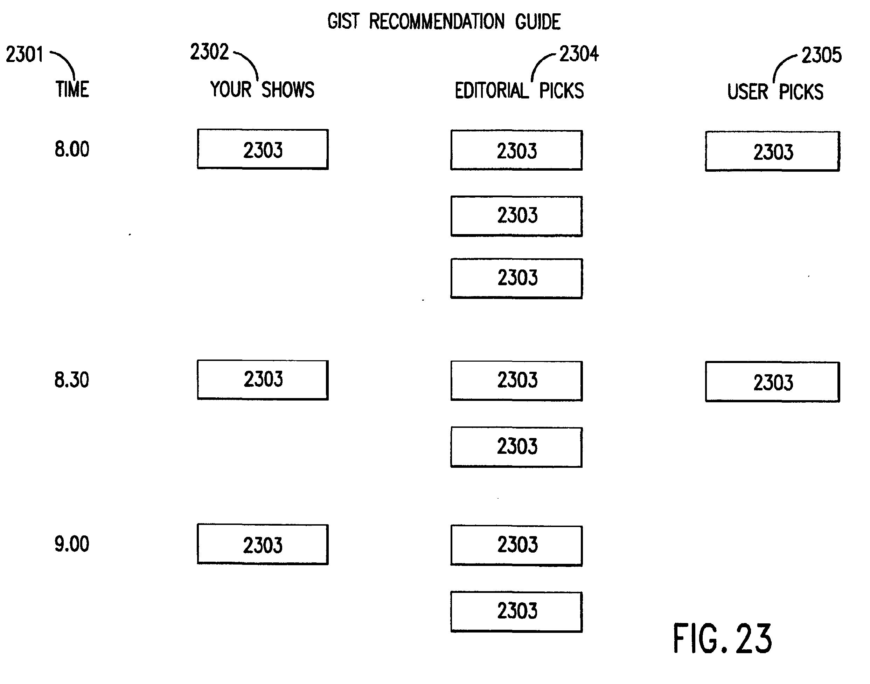

The recommended program information 2203 can be displayed in any suitable way to the user. For example, the recommended program information can be shown as a grid, with the times at which programs are shown across the top, and the source (e.g., channel) on which each program is shown along the side of the screen. Alternatively, the recommended program information can be shown as a list of programs, as shown in Figure 23.

The user can advantageously specify the configuration of the display of recommended program information, e.g., using a graphical user interface. For example, the user can specify the overall format of the display, such as a grid or a list. The user can specify the fields of information to be displayed, such as program source, program time, program fee, etc. Figure 23 shows a display of recommended program information that has been specified by a user in accordance with an embodiment of the present invention. The user has specified that the time at which a program is shown 2301 be displayed on the left side of the screen. The user has further specified that recommended programs be displayed as lists in accordance with methodologies selected by the user.

The first list 2302 indicates scheduled times and program descriptions 2303 of shows specifically selected by the user.

The second list specified by the user 2304 indicates scheduled times and descriptions 2303 of programs that conform to the user's specification of editorial picks, i.e., shows that an editorial staff of the program information service or recommendation guide service has designated as particularly worthwhile. As shown in Figure 23, several editorial picks are shown for a single time slot, e.g., four editorial picks are shown for the eight o'clock time slot.

The third list 2305 shows programs that are popular among users of the listing service who have rated programs.

The present invention provides a richer, more precise means for filtering information about entertainment programs from the universe of available program information than known guides, thereby improving the likelihood that a user of a program information recommendation guide service in accordance with an embodiment of the present invention will detect and be able to view entertainment programs of particular relevance and interest to her. Although the present invention has been described with reference to specific exemplary embodiments, it will be evident to one of ordinary skill in the art that various modifications and changes may be made to these embodiments without departing from the broader spirit and scope of the invention as set forth in the claims. Accordingly, the specification and drawings are to be regarded in an illustrative rather than a restrictive sense.

**Claims**

1. A method comprising:

   receiving programming provider information from a user device;
   retrieving available program information for available programs based on the provider information;

   processing the available program information based on user criteria; and transmitting the processed program information to the user device for presentation, the processed program information being a customized personal subset of the available program information.

2. The method of claim 1, further comprising:

   receiving user criteria from the user device;
   storing the user criteria for use during processing.

3. The method of claim 2, further comprising:

   receiving preferred timing information, the preferred timing information specifying a time period for which the processed program listing is desired.

4. The method of claim 3, wherein the available program information are retrieved for the time period as specified.

5. The method of any of claims 1 to 4, wherein the programming provider information includes a home zip code.

6. The method of any of claims 1 to 4, wherein the programming provider information includes a visiting zip code.

7. The method of any of claims 1 to 4, wherein the programming provider information includes an identity of a programming provider.

8. The method of claim 7, wherein the programming provider is at least one of a cable-TV provider, satellite-TV provider, local broadcast channel provider, and a streaming video provider.

9. The method of any of claims 1 to 8, wherein the user criteria includes a list of favorite programs,

10. The method of any of claims 1 to 9, wherein the user criteria includes at least one of editorial rankings, TV content ratings, public polls, and collaborative filtering.

11. The method of any of claims 1 to 10, wherein processing comprising:

    applying the user criteria to the available program listing.

12. The method of claim 11, wherein processing further comprising:

determining which programs from the available program listing meet the user criteria.

**13.** The method of claim 12, further comprising:

presenting the programs that meet the user criteria in a specified format.

**14.** The method of claim 13, wherein the specified format is a grid.

**15.** The method of claim 14, wherein the grid is combined with favorite programming information.

**16.** The method of any of claims 1 to 15, wherein the specified display format is a program list.

**17.** The method of claim 11, wherein the available programming information include program attributes.

**18.** The method of claim 17, wherein the user criteria includes desired attribute ratings, wherein the attribute ratings indicating a preference for programs having desired attributes.

**19.** The method of claim 18, wherein processing further comprising:

matching desired attributes with the program attributes for the available programming listing; and
transmitting to the user device for presentation, programs that have a desired attribute rating that meets or exceeds a predetermined threshold.

FIG. 1

(1) USER TRANSMITS PROGRAMMING PROVIDER INFORMATION TO SERVER 120 USING USER DEVICE 110.

(2) SERVER 120 RETRIEVES AVAILABLE PROGRAM INFORMATION BASED ON THE PROVIDER INFORMATION.

(3) SERVER 120 PROCESSES PROGRAM INFORMATION BASED ON USER DEFINED PROGRAM CRITERIA.

(4) SERVER 120 TRANSMITS RECOMMENDED PROGRAM INFORMATION TO THE USER 110.

PROGRAM INFORMATION SERVER 120

PROGRAM INFORMATION SERVER 120

NETWORK 100

USER DEVICE 110

USER DEVICE 110

EP 1 193 976 A2

CENTRAL
PROGRAMMING
DATA BASE
210

AVAILABLE PROGRAM
INFORMATION
121

PROCESSOR
122

RECOMMENDED
PROGRAM
INFORMATION
SELECTION
INSTRUCTIONS
125

MEMORY
124

120

USER CRITERIA
123

NETWORK
100

USER
DEVICE
110

FIG. 2

```
        ┌──────────────┐
        │     USER     │ ╭─ 301
        │   ACCESSES   │
        │   PROGRAM    │
        │ INFORMATION  │
        │    SERVER.   │
        └──────────────┘
               │
               ▼
          ╱────────╲  ╭─ 302              ╱────────╲  ╭─ 309        ┌──────────────┐ ╭─ 311
         ╱  IS THE  ╲                    ╱  DO YOU  ╲               │    DISPLAY   │
        ╱  USER A    ╲      NO          ╱  WANT TO   ╲    NO        │   GENERAL    │
        ╲ SUBSCRIBER ╱───────────────▶ ╲  BECOME A  ╱───────────▶  │ INFORMATION  │
         ╲ OF THE   ╱                   ╲SUBSCRIBER?╱               │ ON THE USER  │
          ╲SERVICE?╱                     ╲────────╱                │   DEVICE.    │
           ╲──────╱                          │                     └──────────────┘
              │ YES                          │ YES
              ▼                              ▼
      ┌──────────────┐ ╭─ 303       ┌──────────────┐ ╭─ 310
      │ IDENTIFY USER│             │   REQUEST    │
      │ AND DETERMINE│             │ REGISTRATION │
      │PROGRAM PROVID│◀────────────│INFORMATION FROM│
      │ER INFORMATION│             │USER AND REGISTER│
      │  FROM USER.  │             │    USER.     │
      └──────────────┘             └──────────────┘
              │
              ▼
      ┌──────────────┐ ╭─ 304
      │RECEIVE PROGRAM│
      │   PROVIDER   │
      │ INFORMATION. │
      └──────────────┘
              │
              ▼
      ┌──────────────┐ ╭─ 305
      │SERVER RETRIEVES│
      │AVAILABLE PROGRAM│
      │INFORMATION BASED│
      │ON PROGRAM    │
      │PROVIDER INFORMATION│
      └──────────────┘
              │
              ▼
      ┌──────────────┐ ╭─ 306    ┌──────────────┐ ╭─ 307   ┌──────────────┐ ╭─ 308
      │ RETRIEVE USER│          │ PROCESS THE  │          │   TRANSMIT   │
      │DEFINED CRITERIA.│──────▶│AVAILABLE PROGRAM│──────▶│  PROCESSED   │
      │              │          │ INFORMATION  │          │INFORMATION TO│
      │              │          │ACCORDING TO THE│        │    USER.     │
      │              │          │USER CRITERIA.│          │              │
      └──────────────┘          └──────────────┘          └──────────────┘
```

## FIG. 3

USER CRITERIA TABLE
400

| USER STATED PREFERENCES. |
| --- |
| PROGRAM GENRES<br>  NEWS<br>  SPORTS<br>  DRAMA<br>  SCI-FI<br>FAVORITE CHANNELS<br>FAVORITE ACTORS<br>FAVORITE SUBJECTS<br>ETC. |

401

402

| RANKINGS |
| --- |
| EDITORIAL RANKINGS<br>USER RANKINGS<br>#RD PARTY RANKINGS<br>  MOVIES<br>   TV SHOWS<br>ETC. |

| TV V-CHIP RATINGS |
| --- |
| VIOLENCE<br>SEX<br>MINIMUM AGE<br>ETC. |

403

404

| POLLS |
| --- |
| BY OTHER USERS<br>BY USER |

| TIME PREFERENCES. |
| --- |
| PREFERRED DAYS<br>PREFERRED TIME |

405

406

| ADDITIONAL CRITERIA |
| --- |
| • SHOW TITLES<br>• RUN LENGTHS<br>• CLOSED CAPTION<br>• NUMBER OF STARS<br>• STANDARD SHOW<br>    RATINGS<br>• FAVORITE SPORTS TEAM<br>• DIRECTORS/PROD. ETC |

## FIG. 4

**TV FANCLUBS**

ALLY McBEAL
ANGEL
BEV. 90210

500   (PAGE 1)   501

**TV SEARCH**

◉   TV SHOW
○   TV STAR

TO GET YOUR TV LISTINGS **ENTER ZIP CODE:** ☐ THEN CLICK GIST ME.

**ACCESS YOUR MP3s AND PHOTOS**

fusionOne

TODAY ON GIST TV
▸ SHANNON KENNY: *THE INVISIBLE MAN'S WOMAN*
▸ PARTY WITH CINDY MARGOLIS
▸ FIVE QUESTIONS WITH... *BULL'S* MALIK YOBA
▸ DREADING THE END OF *SURVIVOR?*

**TV FEATURES**

SOAP UPDATES
PICKS & PANS
GOSSIP & NEWS
FEATURES
FANCLUBS
FALL PREVIEW 2000
POLLS
EMMY AWARDS POLL
SURVIVOR POLL
BIG BROTHER POLL

**VIDEOS**
TV QUICKIE w/NIKKI
PPV PREVIEWS
FUNNY WEB VIDEOS

**EXTRAS**
CELEBRITY
KNOCKOUTS   502
HOROSCOPES

**DELIVERY**
THE DAILY GIST
HANDHELD GIST
WIRELESS GIST

FALL PREVIEW
· 2000 FALL TV PREVIEW
YOUR LOOK AT THE NEW SEASON

HOT TOPICS:(MORE)
· *BIG BROTHER:* WASTED AIRTIME?
· WILL *THE SOPRANOS* FINALLY WIN AN EMMY?
· *X-FILES'* NEW X MAN: THE RIGHT CHOICE?

TODAY'S PICKS & PANS:(MORE)
· EVERYBODY LOVES RAYMOND: "COUSIN GERARD"
· 7TH HEAVEN: "SAY A LITTLE PRAYER FOR ME"
· TOPSY-TURVY (1999)

CELEBRITY KNOCKOUTS:(MORE)
· ERIC McCORMACK vs. THOMAS GIBSON
· DEBRA MESSING vs. JENNA ELFMAN

TALK SHOWS:
· ON *POLITICALLY INCORRECT:* PRESIDENTIAL CANDIDATE RALPH NADER

DOCUMENTARIES:
· MUSIC FOR A CAUSE
· BRITISH ROYAL WEDDINGS: POMP & CIRCUMSTANCE

GOSSIP & NEWS (MORE)
· NO REGRETS FOR *SURVIVOR* RICHARD
· IT'S SPLITSVILLE FOR ELLEN AND ANNE
· NBC MAKES A DEAL WITH SISQO

GIST TV POLLS: ——503
· VOTE FOR YOUR FAVORITE EMMY NOMINEES
· WHO WILL BE THE ULTIMATE *SURVIVOR?*
· WHO'S YOUR PICK FOR THE *BIG BROTHER* WINNER?

SCREAMING STREAMING:
· THE GIST LIST OF THE WEB'S MOST HILARIOUS VIDEOS

SOAP UPDATES: (MORE)
· WILL SONNY LEAVE *GH?*

TV FEATURES: (MORE)
· UP, UP AND ON-AIR: NEW SUPERHERO TV
· I SEE DC: WASHINGTONIAN TV
TBS'S *HIGH NOON:* A WORTHY REMAKE?

GIST TV FANCLUBS:
· VISIT OUR NEWEST TV FANCLUBS: COSMOPOLITAN'S *SEX AND THE CITY* AND ME, MYSELF AND *MALCOLM*

**FIG. 5**

EP 1 193 976 A2

610

500 (PAGE 2)

| PRIMETIME TELEVISION FOR AUGUST 21, 2000 | | | | | |
|---|---|---|---|---|---|
| | 8 PM | 8:30 PM | 9 PM | 9:30 PM | 10 PM / 10:30 PM |
| CBS | BIG BROTHER STRANGERS COHABIT AN ISOLATED HOUSE. | THE KING OF QUEENS DOUG AND CARRIE INVITE RAY AND DEBRA BARONE TO DINNER. RERUN | EVERYBODY LOVES RAYMOND DEBRA THINKS RAY AND HIS ANNOYING COUSIN ARE ALIKE. RERUN | BECKER REGGIE HAS A PANIC ATTACK ABOUT HER BLEAK FUTURE. RERUN | FAMILY LAW LYNN AND REX DEFEND A 10-YEAR-OLD BOY ACCUSED OF MURDER. RERUN |
| NBC | MYSTERIOUS WAYS DECIAN INVESTIGATES A LEGEND OF PROTECTIVE SPIRITS. | | LAW & ORDER A GIRL MAY BE RESPONSIBLE FOR A BOY'S DEATH. RERUN | | THIRD WATCH CREWS SEARCH FOR A MISSING TODDLER. RERUN |
| FOX | OPPOSITE SEX MR. OSLO TRAVELS TO NEW YORK WITH THE MODEL U.N. | | ALLY McBEAL RENEE'S RAMBUNCTIOUS DATE CHARGES HER WITH ASSAULT. RERUN | | NEWS |
| ABC | NFL PRESEASON FOOTBALL | | | | |
| UPN | MOESHA MOESHA'S EX BOYFRIEND RETURNS WITH AN OFFER. RERUN | THE PARKERS KIM AND STEVIE'S MOTHERS CRASH THEIR HOUSEWARMING PARTY. RERUN | GROWN UPS J's EX-GIRLFRIEND GIVES HIM HER DOG. RERUN | MALCOLM & EDDIE MALOM'S BOYFRIEND BROADCASTS FROM THE CLUB RERUN | NEWS |
| WB | 7th HEAVEN THE REV. CAMDEN ENCOURAGES PRAYER. RERUN | | YOUNG AMERICANS WILL AND A RIVAL UPPERCLASSMAN COMPETE FOR LOVE. | | NEWS |

HOMEPAGE     ABOUT GIST     ADVERTISE     PRESS     PRIVACY     HELP     SITE MAP     FEEDBACK

COPYRIGHT © 1997-2000 GIST COMMUNICATIONS, INC. ALL RIGHTS RESERVED.
TV LISTINGS DATA PROVIDED BY TRIBUNE MEDIA SERVICES, INC.

FIG.6

FIG. 7

EP 1 193 976 A2

FIG.8

# GIST TV LISTINGS GRID - NETSCAPE

File  Edit  View  Go  Communicator  Help

Back  Forward  Reload  Home  Search  Netscape  Print  Security  Shop  Stop

Bookmarks  ○ Location  http://galadev.gist.com/tv/grid.jsp?welcome#1   ○ What's Related

Instant Message  WebMail  Redo  People  Yellow Pages  Download  Calendar  Channels

WELCOME, NEW USER                    MOVIES ON TV SPORTS ON TV|MY TV CALENDAR|MY OPTIONS|HELP

| ACCESS YOUR MP3S AND PHOTOS FROM ANY DEVICE | SHANNON KENNY:  THE INVISIBLE MAN'S WOMAN | | PARTY WITH CINDY MARGOLIS | |
|---|---|---|---|---|
| | FIVE QUESTIONS WITH ... BULLS MALIK YOBA | | DREADING THE END OF SURVIVOR? | |
| SIGN UP FREE fusionOne | FREE CATALOGS & GREAT SAVINGS | CLICK HERE FOR HILARIOUS WEB VIDEOS | | THE GREEN MILE ON PAY-PER-VIEW |

PAGE 1 | ALL (10 CHANNELS OF 10 DISPLAYED) FOR BROADCAST
REMOVE A CHANNEL, WIDTH IN HOURS 2 | 3 | 4 | 5  SHOW DESCRIPTIONS, HIDE NAVIGATION BAR

TV FEATURES
SOAP UPDATES
PICKS & PANS
GOSSIP & NEWS
FEATURES
FANCLUBS
FALL PREVIEW 2000
POLLS
  EMMY AWARDS POLL
  SURVIVOR POLL
  BIG BROTHER POLL
VIDEOS
TV QUICKIE w/NIKKI
PPV PREVIEWS
FUNNY WEB VIDEOS
EXTRAS
CELEBRITY
KNOCKOUTS
HOROSCOPES
DELIVERY
THE DAILY GIST
HANDHELD GIST
WIRELESS GIST

| | | | | |
|---|---|---|---|---|
| 2 NEWS AT 6 PM | ABC NEWS | JEOPARDY | WHEEL OF FORTUNE | THE GREEN MILE |
| 11 NEWS AT 6 | NBC NEWS | INSIDE EDITION | HOLLYWOOD SQUARES | MYSTERIOUS WAYS |
| EYEWITNESS NEWS AT SIX | | CBS NEWS | ENTERTAINMENT TONIGHT | BIG BROTHER |
| THE NEWSHOUR WITH JIM LEHRER | | NEWSNIGHT MARYLAND | NIGHTLY BUSINESS REPORT | ANTIQUES ROADSHOW |
| FRESH PRINCE OF BEL-AIR | THE COSBY SHOW | FAMILY FEUD | M*A*S*H* | TODAY!  THE ROOM |
| DRAGON TALES | NIGHTLY BUSINESS REPORT | THE NEWSHOUR WITH JIM LEHRER | | ANTIQUES ROADSHOW |
| WISHBONE  902 | WORLD NEWS FOR PUBLIC TELEVISION | BBC WORLD NEWS | THE BIG PICTURE | EVENING EXCHANGE |
| FRIENDS | FRASIER | SEINFELD | THE DREW CARRY SHOW | OPPOSITE SEX |
| JUDGE JUDY RERUN | WB54 NEWS AT 6:30 | JUDGE JUDY | LIVING SINGLE | 7TH HEAVEN, RERUN |

PAGE 1 | ALL (10 CHANNELS OF 10 DISPLAYED) FOR BROADCAST
REMOVE A CHANNEL, WIDTH IN HOURS 2 | 3 | 4 | 5  SHOW DESCRIPTIONS, HIDE NAVIGATION BAR

ORDER NOW  [$]  -CLICK ON THESE LINKS TO ORDER THE INDICATED MOVIE OR EVENT DIRECTLY FROM YOUR LOCAL CABLE OPERATOR

COLOR KEY

| SOAPS | SPORTS | MOVIES | NEWS |
|---|---|---|---|
| COMEDY | DRAMA | SCI-FI/FANTASY | KIDS |

0% OF 9<

901

FIG. 9

TV FANCLUBS

| ALLY McBEAL | ▲ |
| ANGEL | |
| BEV. 90210 | ▼ |

**1000**

MON, AUG 21, 2000 6:30PM

HOME ▸ TV LISTINGS ▸ PROGRAM DESCRIPTION

TV SEARCH

[ ]

● TV SHOW
○ TV STAR

| DAY: | HOUR: | CATEGORIES: | CHANNELS: |
| SUN 8/20 ▼ | ALL DAY ▼ | MY CATEGORIES ▼ | MY CATEGORIES ▼ |

WELCOME, NEW USER

ACCESS YOUR
MP3s AND PHOTOS

[ ❋ ]
fusionOne

TV FEATURES

SOAP UPDATES
PICKS & PANS
GOSSIP & NEWS
FEATURES
FANCLUBS
FALL PREVIEW 2000
POLLS
EMMY AWARDS POLL
SURVIVOR POLL
BIG BROTHER POLL

VIDEOS

TV QUICKIE w/NIKKI
PPV PREVIEWS
FUNNY WEB VIDEOS

EXTRAS

CELEBRITY
KNOCKOUTS
HOROSCOPES

DELIVERY

THE DAILY GIST
HANDHELD GIST
WIRELESS GIST

WHY PAY FOR
TV MAGAZINES

SHOW DESCRIPTION ........................ BACK TO LISTINGS

SEND THIS TO A FRIEND

FRESH PRINCE OF BEL-AIR ～1001

THE CLIENT
WUTB 24 06:00PM-06:30PM MONDAY AUG 21 ～1002

WILL MANAGES THE RISING SINGING CAREER OF ～1003  ⁄1004  UPN
ASHLEY. PART 1 OF 2.
WITH: WILL SMITH, JAMES AVERY, DAPHNE MAXWELL REID, KARYN
PARSONS, ALFONSO RIBEIRO, TATYANA M. ALI, JOSEPH MARCELL, ROSS
BAGLEY, JEFFREY A.TOWNES, OBBA BABATUNDE, DARNELL SUTTLES,
PAIGE CARTER, DAVID ZUCKERMAN, QUINCY JONES, LITTLE RICHARD.
EXECUTIVE PRODUCER: QUINCY JONES, EXECUTIVE PRODUCER: GARY H.
MILLER, PRODUCER: WERNER WALIAN, DIRECTOR: SHELLEY JENSEN.

NETWORK
WEBSITES

GENRE
WEBSITES

GIST
COMEDY
ARTICLE
ARCHIVE

COMEDY ～1006                                          1005

STEREO. CC.

● SHOW ○ EPISODE [RATE THIS PROGRAM] ～1007

● SHOW ○ EPISODE [ADD TO MY TV CALENDAR] ～1008

◀PREVIOUS PROGRAM ON WUTB 24        NEXT PROGRAM ON WUTB 24 ▶
OTHER SHOWTIMES THIS WEEK ～1009

HOMEPAGE   ABOUT GIST   ADVERTISE   PRESS   PRIVACY   HELP   SITE MAP   FEEDBACK
COPYRIGHT©1997-2000 GIST COMMUNICATIONS, INC. ALL RIGHTS RESERVED.
TV LISTINGS DATA PROVIDED BY TRIBUNE MEDIA SERVICES, INC.

FIG. 10

EPISODE'S RATINGS

<u>1100</u>

FRESH PRINCE OF BEL-AIR —— 1101

1101 —— | 8      ▼ |    | RATE | —— 1102

| 10
9
8
7
6
.

.

.

.
1 |  —— CHOICE OF RATINGS

FIG. 11

EP 1 193 976 A2

EPISODE'S RATINGS

<u>1200</u>

FRESH PRINCE OF BEL-AIR

CLICK HERE TO ADD THIS PROGRAM TO YOUR TV CALENDAR.
NOTE: BLAH BLAH BLAH.
<u>ADD TO MY TV CALENDAR NOW</u>——1202

1 USER(S) HAVE RATED THIS PROGRAM AS A 8 [OUT OF A MAXIMUM OF 10]

| VOTES | PERCENTAGE | RATING |
|---|---|---|
| 0 | | 10 |
| 0 | | 9 |
| 1 | 100% | 8 |
| 0 | | 7 |
| 0 | | 6 |
| 0 | | 5 |
| 0 | | 4 |
| 0 | | 3 |
| 0 | | 2 |
| 0 | | 1 |

——1201

FIG. 12

EP 1 193 976 A2

FIG.13

TV FAN CLUBS

| ALLY McBEAL | ▲ |
| ANGEL | |
| BEV. 90210 | ▼ |

HOME   FAVORITES   MY CALENDAR

TV SEARCH

☐

◉  TV SHOW
○  TV STAR

DAY: [TODAY ▼]   HOUR: [NOW ▼]   CATEGORIES: [MY CATEGORIES ▼]   CHANNELS: [MY CHANNELS ▼]

WELCOME, NEW USER
MY TV

CALENDAR          MY TV CALENDAR                    1300                    . DISPLAY [4 DAYS ▼]

FAVORITES         DISPLAY THIS AS A LIST

RATINGS

| HOUR/DAY | THU 8/17 | FRI 8/18 | SAT 8/19 | SUN 8/20 |
|---|---|---|---|---|
| | | | | |
| 6:00PM | 6:00PM WUTB-24 FRESH PRINCE OF BEL-AIR NOT WITH MY PIG, YOU DON'T | | | |
| 9:00PM | 9:00PM WBAL-11 WILL & GRACE TEA AND A TOTAL LACK OF SYMPATHY | | | |

THE GIST LISTS
USER TOP RATED
    SHOWS
    MOVIES
USER FAVORITES
    SHOWS
    MOVIES
    CELEBS
  -CALENDAR VIEW
  -LIST VIEW

~1301

☐ DISPLAY REMINDER ICONS    IN TV CALENDAR*

NOTE: TO ADD FAVORITES TO YOUR CALENDAR SELECT THE "ADD FAVORITE" BUTTON ON ANY PROGRAM DESCRIPTION. CLICK HERE TO SEE YOUR LISTINGS OR SELECT A FAVORITE FROM THE TOP FAVORITES THE OTHER GIST USERS HAVE SELECTED BY CLICKING HERE. PLEASE BE ASSURED THAT ALL YOUR FAVORITES ARE STORED PRIVATELY FROM OTHER USERS IN ACCORDS WITH OUR PRIVACY POLICY. *USERS MAY USE THE CALENDAR REMINDER SERVICE AVAILABLE IN MICROSOFT OUTLOOK 2000 OR OTHER SYSTEMS THAT SUPPORT THE STANDARD iCALENDAR (INTERNET CALENDARING & SCHEDULING) FORMAT TO SAVE SHOW EVENTS.

EP 1 193 976 A2

ALLY McBEAL ▲
ANGEL
BEV. 90210 ▼

HOME   FAVORITES

TV SEARCH

[                    ]

◉  TV SHOW
○  TV STAR

WELCOME, NEW USER

MY TV

CALENDAR

FAVORITES

RATINGS

THE GIST LISTS
USER TOP RATED
SHOWS

MOVIES

USER FAVORITES
SHOWS

MOVIES

CELEBS

−CALENDAR VIEW
−LIST VIEW

THU, AUG 17, 2000 4:35 PM

DAY: [TODAY ▼]   HOUR: [NOW ▼]   CATEGORIES: [MY CATEGORIES ▼]   CHANNELS: [MY CHANNELS ▼]

MY TV FAVORITES
DISPLAY THIS AS A CALENDAR                    <u>1400</u>

| TYPE | SHOW | EPISODE/YEAR | CALENDAR | E-MAIL REMINDER | MY RATING | |
|------|------|--------------|----------|-----------------|-----------|--|
| UNKNOWN | FRESH PRINCE OF BEL-AIR | NOT WITH MY PIG, YOU DON'T | ON | | RATE | REMOVE |
| UNKNOWN | WILL & GRACE | TEA AND A TOTAL LACK OF SYMPATHY | ON | | RATE | REMOVE |

—1401

UPDATE EMAIL ADDRESS: [                    ]   [ UPDATE ]

NOTE: USE THIS PAGE TO VIEW YOUR PERSONAL FAVORITES. YOU CAN SELECT FAVORITES THAT YOU WOULD LIKE TO RECEIVE EMAIL REMINDERS WHEN THE PROGRAM WILL AIR. YOU CAN SORT YOUR FAVORITES BY CONVENIENT ATTRIBUTES INCLUDING SHOW TYPE, SHOW NAME, EPISODE/YEAR, RATING, AND EMAIL SERVICE REQUEST. YOU CAN ALSO REMOVE A FAVORITE IF YOU NO LONGER WISH TO HAVE IT IN YOUR LIST.

HOMEPAGE   ABOUT GIST   ADVERTISE   PRESS   PRIVACY   HELP   SITE MAP   FEEDBACK

COPYRIGHT©1997−2000 GIST COMMUNICATIONS, INC. ALL RIGHTS RESERVED.
TV LISTINGS DATA PROVIDED BY TRIBUNE MEDIA SERVICES, INC.

FIG. 14

EP 1 193 976 A2

**TV FANCLUBS**

| | |
|---|---|
| ALLY McBEAL | ▲ |
| ANGEL | |
| BEV. 90210 | ▼ |

—1501

**1500**

HOME ► TV/LISTINGS ► MY TV          MON, AUG 21, 2000 7:00PM

**TV SEARCH**
TED DANSON
● TV SHOW
○ TV STAR
WELCOME, NEW USER

| DAY: | HOUR: | CATEGORIES: | CHANNELS: |
|---|---|---|---|
| SUN 8/20 ▼ | ALL DAY ▼ | MY CATEGORIES ▼ | MY CHANNELS ▼ |

ACCESS YOUR

✂ fusionOne

SHANNON KENNY: *THE INVISIBLE MAN'S WOMAN*          PARTY WITH CINDY MARGOLIS
FIVE QUESTIONS WITH... *BULL'S* MALIK YOBA          DREADING THE END OF *SURVIVOR?*
FREE CATALOGS & GREAT   CLICK HERE FOR HILARIOUS WEB          THE GREEN
SAVINGS          VIDEOS          MILE ON PAY PER-VIEW

PAGE1 | ALL (10 CHANNELS OF 10 DISPLAYED) FOR **BROADCAST**
REMOVE A CHANNEL, WIDTH IN HOURS 2|3|4|5, SHOW DESCRIPTIONS, HIDE NAVIGATION BAR

**TV FEATURES**
SOAP UPDATES
PICKS & PANS
GOSSIP & NEWS
FEATURES
FANCLUBS
FALL PREVIEW 2000
POLLS
 EMMY AWARDS POLL
SURVIVOR POLL
BIG BROTHER POLL

**VIDEOS**
TV QUICKIE w/NIKKI
PPV PREVIEWS
FUNNY WEB VIDEOS

**EXTRAS**
CELEBRITY
KNOCKOUTS
HOROSCOPES

**DELIVERY**
THE DAILY GIST
HANDHELD GIST
WIRELESS GIST

| TV MAGAZINE |
| $1.79 |

| ◄ ► | 6:30PM | 7:00PM | 7:30PM | 8:00PM | 8:30PM | 9:00PM |
|---|---|---|---|---|---|---|
| 2 WMAR | ABC NEWS | JEOPARDY! | WHEEL OF FORTUNE | NFL PRESEASON GREENBAY DOLPHINS | | |
| 11 WBAL | NBC NEWS | INSIDE EDITION | HOLLYWOOD SQUARES | MYSTERIOUS WAYS | | LAW & ORDER RERUN> |
| 13 WRZ | <EYEWITNESS NEWS AT SIX | CBS NEWS | ENTERTAINMENT TONIGHT | BIG BROTHER | | EVERBODY LOVES RAYMOND RERUN |
| 22 WMPT | <THE NEWSHOUR WITH JIM LEHRER | NEWSNIGHT MARYLAND | NIGHTLY BUSINESS REPORT | ANTIQUES ROADSHOW | | EMPIRE OF THE BAY> |
| 26 WPXY | THE COSBY SHOW | FAMILY FEUD | M*A*S*H | MOESHA RERUN | THE PARKERS RERUN | GROWN UPS RERUN |
| 32 WHFS | NIGHTLY BUSINESS REPORT | THE NEWSHOUR WITH JIM LEHRER | | ANTIQUES ROADSHOW | | EMPIRE OF THE BAY> |
| 40 WMBC | WORLD NEWS FOR PUBLIC TELEVISION | BBC WORLD NEWS | THE BIG PICTURE | EVENING EXCHANGE | | P.O.V> |
| 45 WBFF | FRASIER | SEINFELD | THE DREW CAREY SHOW | OPPOSITE SEX | | ALLY McBEAL RERUN> |
| 54 WNLY | WB54 NEWS AT 6:30 | JUDGE JUDY | LIVING SINGLE | 7TH HEAVEN RERUN | | YOUNG AMERICANS> |

PAGE1 | ALL (10 CHANNELS OF 10 DISPLAYED) FOR **BROADCAST**
REMOVE A CHANNEL, WIDTH IN HOURS 2|3|4|5, SHOW DESCRIPTIONS, HIDE NAVIGATION BAR

ORDER NOW [💲] –CLICK ON THESE LINKS TO ORDER THE INDICATED MOVIE
OR EVENT DIRECTLY FROM YOUR LOCAL OPERATOR.

COLOR KEY

| SOAPS | SPORTS | MOVIES | NEWS |
|---|---|---|---|
| COMEDY | DRAMA | SCI-FI/FANTASY | KIDS |

# FIG. 15

TV FAN CLUBS

| ALLY McBEAL |
| ANGEL |
| BEV. 90210 |

**1600**

HOME ▶ FAVORITES ▶ MY CALENDAR          MON, AUG 21, 2000 6:55PM

TV SEARCH

◉ TV SHOW
○ TV STAR

| DAY: | HOUR: | CATEGORIES: | CHANNELS: |
| SUN 8/20 ▼ | ALL DAY ▼ | MY CATEGORIES ▼ | MY CATEGORIES ▼ |

WELCOME, NEW USER

MY TV

▦ CALENDAR
▤ FAVORITES
▤ RATINGS          1610

THE GIST LISTS
USER TOP RATED
▦ ▤ SHOWS
▦ ▤ MOVIES
USER FAVORITES
▦ ▤ SHOWS
▦ ▤ MOVIES
▦ ▤ CELEBS

▦ –CALENDAR VIEW
▤ –LIST VIEW

CELEBRITY SEARCH FOR *TED DANSON* —1602          DISPLAY [ 1DAY ▼ ]
CELEBRITY BIOGRAPHY —1603
DISPLAY SEARCH AS LIST     ADD THIS SEARCH TO MY —1605
CALENDAR ➔     —1604

CELEBRITY A–Z:  A  B  C  D  E  F  G  H  I  J  K  L  M  N  O  P  Q     **1601**
R  S  T  U  V  W  X  Y  Z

| HOUR/DAY | MON 8/21 | TUE 8/22 | WED 8/23 | THU 8/24 |
|---|---|---|---|---|
| 2:00PM | 2:00PM WBFF–45 CHEERS TAKE MY SHIRT... PLEASE? ➔ | 2:00PM WBFF–45 CHEERS THE PETERSON PRINCIPLE ➔ | 2:00PM WBFF–45 CHEERS DARK IMAGININGS ➔ | 2:00PM WBFF–45 CHEERS SAVE THE LAST DANCE FOR ME ➔ |
| 9:00PM | 9:30PM WJZ–13 BECKER PANIC ON THE 86TH FLOOR ➔ | | | |

☐ DISPLAY REMINDER ICONS ▦ IN TV CALENDAR✦

NOTE: TO ADD FAVORITES TO YOUR CALENDAR SELECT THE "ADD FAVORITE" BUTTON ON ANY PROGRAM DESCRIPTION. CLICK HERE TO SEE YOUR LISTINGS OR SELECT A FAVORITE FROM THE TOP FAVORITES THAT OTHER GIST USERS HAVE SELECTED BY CLICKING HERE. PLEASE BE ASSURED THAT ALL YOUR FAVORITES ARE STORED PRIVATELY FROM OTHER USERS IN ACCORDS WITH OUR PRIVACY POLICY. ✦USERS MAY USE THE CALENDAR REMINDER SERVICE AVAILABLE IN MICROSOFT OUTLOOK 2000 OR OTHER SYSTEMS THAT SUPPORT THE STANDARD iCALENDAR (INTERNET CALENDARING & SCHEDULING) FORMAT TO SAVE SHOW EVENTS.

HOMEPAGE    ABOUT GIST    ADVERTISE    PRESS    PRIVACY    HELP    SITE MAP    FEEDBACK

COPYRIGHT©1997–2000 GIST COMMUNICATIONS, INC. ALL RIGHTS RESERVED. TV LISTINGS DATA PROVIDED BY TRIBUNE MEDIA SERVICES, INC.

# FIG. 16

TV FAN CLUBS

| ALLY McBEAL | ▲ |
| ANGEL | |
| BEV. 90210 | ▼ |

1700

HOME ► TOP RATED ► SHOWS                    MON, AUG 21, 2000 6:56PM

TV SEARCH

[ ]

● TV SHOW
○ TV STAR

| DAY: | HOUR: | CATEGORIES: | CHANNELS: |
| SUN 8/20 ▼ | ALL DAY ▼ | MY CATEGORIES ▼ | MY CHANNELS ▼ |

WELCOME, NEW USER

MY TV

▦ CALENDAR
▤ FAVORITES
▤ RATINGS

THE GIST LISTS

USER TOP RATED
▦ ▤ SHOWS
▦ ▤ MOVIES
USER FAVORITES
▦ ▤ SHOWS
▦ ▤ MOVIES
▦ ▤ CELEBS

▦—CALENDAR VIEW
▤—LIST VIEW

TOP RATED SHOWS AS RATED BY GIST USERS                    1701

DISPLAY THIS AS A CALENDAR ▦

| TITLE | EPISODE/YEAR | WEIGHTED AVERAGE | ADD TO MY TV CALENDAR |
|---|---|---|---|
| THE SIMPSONS | | 8.0 | ADD ➡ |
| THE WEST WING | | 7.9 | ADD ➡ |
| STAR TREK: VOYAGER | | 7.8 | ADD ➡ |
| 3RD ROCK FROM THE SUN | | 7.7 | ADD ➡ |
| LAW & ORDER | | 7.4 | ADD ➡ |
| SEX AND THE CITY | | 6.9 | ADD ➡ |
| ALLY McBEAL | | 6.9 | ADD ➡ |
| BUFFY THE VAMPIRE SLAYER | | 6.7 | ADD ➡ |
| FRIENDS | | 5.9 | ADD ➡ |
| SURVIVOR | | 5.7 | ADD ➡ |

1704          1703          1702

HOMEPAGE   ABOUT GIST   ADVERTISE   PRESS   PRIVACY   HELP   SITE MAP   FEEDBACK
COPYRIGHT©1997-2000 GIST COMMUNICATIONS, INC. ALL RIGHTS RESERVED.
TV LISTINGS DATA PROVIDED BY TRIBUNE MEDIA SERVICES, INC.

FIG.17

TV FANCLUBS

| ALLY McBEAL | ▲ |
| ANGEL | |
| BEV. 90210 | ▼ |

**1800**

HOME ► TOP RATED ► MOVIES                    MON, AUG 21, 2000 6:56PM

TV SEARCH

⊙ TV SHOW
○ TV STAR

| DAY: | HOUR: | CATEGORIES: | CHANNELS: |
| SUN 8/20 ▼ | ALL DAY ▼ | MY CATEGORIES ▼ | MY CHANNELS ▼ |

WELCOME, NEW USER

MY TV

▦ CALENDAR
▤ FAVORITES
▤ RATINGS

THE GIST LISTS
USER TOP RATED
▦ ▤ SHOWS
▦ ▤ MOVIES
USER FAVORITES
▦ ▤ SHOWS
▦ ▤ MOVIES
▦ ▤ CELEBS

▦ –CALENDAR VIEW
▤ –LIST VIEW

TOP RATED SHOWS AS RATED BY GIST USERS                    **1802**

DISPLAY THIS AS A CALENDAR ▦

| TITLE | EPISODE/YEAR | WEIGHTED AVERAGE | ADD TO MY TV CALENDAR |
|---|---|---|---|
| MAN ON THE MOON | 1999 | 6.7 | ADD ➜ |
| SLEEPY HOLLOW | 1999 | 6.6 | ADD ➜ |
| GLORY | 1989 | 6.5 | ADD ➜ |
| COBRA | 1986 | 4.8 | ADD ➜ |
| THE WORLD IS NOT ENOUGH | 1999 | 4.7 | ADD ➜ |

1804          1803          1801

HOMEPAGE   ABOUT GIST   ADVERTISE   PRESS   PRIVACY   HELP   SITE MAP   FEEDBACK
COPYRIGHT©1997–2000 GIST COMMUNICATIONS, INC. ALL RIGHTS RESERVED.
TV LISTINGS DATA PROVIDED BY TRIBUNE MEDIA SERVICES, INC.

FIG. 18

TV FANCLUBS

| ALLY McBEAL | ▲ |
| ANGEL | |
| BEV. 90210 | ▼ |

HOME ► FAVORITE ► SHOWS

1900

MON, AUG 21, 2000 6:57PM

TV SEARCH

◉ TV SHOW
○ TV STAR

WELCOME, NEW USER

| DAY: | HOUR: | CATEGORIES: | CHANNELS: |
| SUN 8/20 ▼ | ALL DAY ▼ | MY CATEGORIES ▼ | MY CHANNELS ▼ |

MY TV

▦ CALENDAR
▤ FAVORITES
▤ RATINGS

THE GIST LISTS

USER TOP RATED
▦ ▤ SHOWS
▦ ▤ MOVIES

USER FAVORITES
▦ ▤ SHOWS
▦ ▤ MOVIES
▦ ▤ CELEBS

▦ –CALENDAR VIEW
▤ –LIST VIEW

TOP RATED SHOWS AS SELECTED BY GIST USERS

1902

DISPLAY THIS AS A CALENDAR ▦

| SHOW | EPISODE/YEAR | # USER WITH THIS FAVORITE | ADD TO MY TV CALENDAR |
|---|---|---|---|
| STAR TREK: VOYAGER | | 881 | ADD ➡ |
| THE X-FILES | | 580 | ADD ➡ |
| FRIENDS | | 513 | ADD ➡ |
| ALLY McBEAL | | 462 | ADD ➡ |
| BUFFY THE VAMPIRE SLAYER | | 451 | ADD ➡ |
| ER | | 417 | ADD ➡ |
| STARGATE SG-1 | | 414 | ADD ➡ |
| LAW & ORDER | | 363 | ADD ➡ |
| THE WEST WING | | 363 | ADD ➡ |
| ANGEL | | 339 | ADD ➡ |

1904 ⌐          1903 ⌐          1901 ⌐

HOMEPAGE   ABOUT GIST   ADVERTISE   PRESS   PRIVACY   HELP   SITE MAP   FEEDBACK

COPYRIGHT©1997-2000 GIST COMMUNICATIONS, INC. ALL RIGHTS RESERVED.
TV LISTINGS DATA PROVIDED BY TRIBUNE MEDIA SERVICES, INC.

FIG. 19

TV FANCLUBS

| ALLY McBEAL | ▲ |
| ANGEL | |
| BEV. 90210 | ▼ |

**2000**

HOME ▸ FAVORITE ▸ MOVIES                              MON, AUG 21, 2000 6:57PM

TV SEARCH

[          ]

● TV SHOW
○ TV STAR

| DAY: | HOUR: | CATEGORIES: | CHANNELS: |
| SUN 8/20 ▼ | ALL DAY ▼ | MY CATEGORIES ▼ | MY CHANNELS ▼ |

WELCOME, NEW USER

MY TV

▦ CALENDAR
▤ FAVORITES
▤ RATINGS

[ THE GIST LISTS ]

USER TOP RATED
▦ ▤ SHOWS
▦ ▤ MOVIES

USER FAVORITES
▦ ▤ SHOWS
▦ ▤ MOVIES
▦ ▤ CELEBS

▦ –CALENDAR VIEW
▤ –LIST VIEW

FAVORITE GIST MOVIES AS SELECTED BY GIST USERS            **2002**
DISPLAY THIS AS A CALENDAR ▦

| TITLE | EPISODE/YEAR | # USER WITH THIS FAVORITE | ADD TO MY TV CALENDAR |
|---|---|---|---|
| THE MATRIX | 1999 | 30 | ADD ➡ |
| OFFICE SPACE | 1999 | 10 | ADD ➡ |
| YOU'VE GOT MAIL | 1998 | 10 | ADD ➡ |
| THE PRINCE OF EGYPT | 1998 | 9 | ADD ➡ |
| GO | 1999 | 8 | ADD ➡ |
| NEVER BEEN KISSED | 1999 | 8 | ADD ➡ |
| WAKING NED DEVINE | 1998 | 8 | ADD ➡ |
| DIE HARD WITH A VENGEANCE | 1995 | 7 | ADD ➡ |
| JAILBAIT | 2000 | 7 | ADD ➡ |
| MESSAGE IN A BOTTLE | 1999 | 7 | ADD ➡ |
| PRACTICAL MAGIC | 1998 | 7 | ADD ➡ |
| THE SIEGE | 1998 | 7 | ADD ➡ |
| TITANIC | 1953 | 7 | ADD ➡ |
| 8MM | 1999 | 6 | ADD ➡ |
| ARMAGEDDON | 1998 | 6 | ADD ➡ |
| CITY OF ANGELS | 1998 | 6 | ADD ➡ |
| DIRTY DANCING | 1987 | 6 | ADD ➡ |
| THERE'S SOMETHING ABOUT MARY | 1998 | 6 | ADD ➡ |
| TITANIC | 1997 | 6 | ADD ➡ |
| WING COMMANDER | 1999 | 6 | ADD ➡ |

**FIG. 20**

2004          2003          2001

TV FANCLUBS

| ALLY McBEAL | ▲ |
| ANGEL | |
| BEV. 90210 | ▼ |

__2100__

HOME ► FAVORITE ► CELEBRITIES

MON, AUG 21, 2000 6:58PM

TV SEARCH

[            ]

⦿ TV SHOW
○ TV STAR

| DAY: | HOUR: | CATEGORIES: | CHANNELS: |
| SUN 8/20 ▼ | ALL DAY ▼ | MY CATEGORIES ▼ | MY CHANNELS ▼ |

WELCOME, NEW USER

| MY TV |

▦ CALENDAR
▤ FAVORITES
▤ RATINGS

| THE GIST LISTS |

USER TOP RATED
▦ ▤ SHOWS
▦ ▤ MOVIES
USER FAVORITES
▦ ▤ SHOWS
▦ ▤ MOVIES
▦ ▤ CELEBS

▦ –CALENDAR VIEW
▤ –LIST VIEW

FAVORITE GIST CELEBRITIES AS SELECTED BY GIST USERS          2102

DISPLAY THIS AS A CALENDAR ▦

| CELEBRITIES | EPISODE/YEAR | # USER WITH THIS FAVORITE | ADD TO MY TV CALENDAR |
|---|---|---|---|
| SHEEN, MARTIN | | 3 | ADD ➡ |
| LESURE, JAMES | | 2 | ADD ➡ |
| ANISTON, JENNIFER | | 1 | ADD ➡ |
| MARTIN, BARNEY | | 1 | ADD ➡ |
| KINNEY, KATHY | | 1 | ADD ➡ |
| STOLTZ, ERIC | | 1 | ADD ➡ |
| SCHWIMMER, DAVID | | 1 | ADD ➡ |
| WINGER, DEBRA | | 1 | ADD ➡ |
| ALLEN, WOODY | | 1 | ADD ➡ |
| DANSON, TED | | 1 | ADD ➡ |

2104                          2103                      2101

HOMEPAGE   ABOUT GIST   ADVERTISE   PRESS   PRIVACY   HELP   SITE MAP   FEEDBACK

COPYRIGHT©1997–2000 GIST COMMUNICATIONS, INC. ALL RIGHTS RESERVED.
TV LISTINGS DATA PROVIDED BY TRIBUNE MEDIA SERVICES, INC.

FIG. 21

FIG. 22

UNIVERSE OF AVAILABLE PROGRAM INFORMATION 2201

FILTER 2202

EXPLICIT USER INFORMATION 2204

USER-SUPPLIED METHODOLOGY INFORMATION 2205

IMPLICIT USER INFORMATION 2206

THIRD PARTY INFORMATION 2207

METHODOLOGIES 2208

RECOMMENDATION PROGRAM INFORMATION 2203

EP 1 193 976 A2

GIST RECOMMENDATION GUIDE

| 2301 TIME | 2302 YOUR SHOWS | 2304 EDITORIAL PICKS | 2305 USER PICKS |
|---|---|---|---|
| 8.00 | 2303 | 2303 | 2303 |
| | | 2303 | |
| | | 2303 | |
| 8.30 | 2303 | 2303 | 2303 |
| | | 2303 | |
| 9.00 | 2303 | 2303 | |
| | | 2303 | |

FIG. 23

EP 1 193 976 A2